(19) Europäisches Patentamt
European Patent Office
Office européen des brevets

(11) Publication number: 0 024 850 B1

(12) **EUROPEAN PATENT SPECIFICATION**

(45) Date of publication of patent specification: 31.10.84

(51) Int. Cl.$^3$: **H 04 N 9/491**

(21) Application number: 80302780.4

(22) Date of filing: 13.08.80

# (54) Video signal recording and reproducing apparatus.

(30) Priority: 20.08.79 JP 106371/79
20.08.79 JP 106372/79
14.12.79 JP 163422/79
28.12.79 JP 172565/79
25.02.80 JP 22541/80

(43) Date of publication of application:
11.03.81 Bulletin 81/10

(45) Publication of the grant of the patent:
31.10.84 Bulletin 84/44

(84) Designated Contracting States:
DE FR GB

(56) References cited:
DE-A-2 117 178
DE-A-2 549 364
FR-A-2 386 096
GB-A-1 108 088
US-A-3 157 739

(73) Proprietor: Matsushita Electric Industrial Co., Ltd.
1006, Oaza Kadoma
Kadoma-shi Osaka-fu, 571 (JP)

(72) Inventor: Sekimoto, Kunio
7-5, Myokenhigashi-1-chome
Katano-shi (JP)
Inventor: Shibuya, Mitsugu
3-14, Miyukihigashimachi
Neyagawa-shi (JP)

(74) Representative: Newens, Leonard Eric et al
F.J. CLEVELAND & COMPANY 40/43 Chancery Lane
London WC2A 1JQ (GB)

EP 0 024 850 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a recording and reproducing apparatus for a PAL or SECAM system color television signal which enables long time recording and can reproduce proper color image without skew distortion in the picture image due to the discontinuity of horizontal synchronizing signal even in a special reproduction mode such as still reproduction mode, slow motion reproduction mode, fast forward reproduction mode and reverse reproduction mode.

Recent trend of a home video tape recorder (VTR) is to high density recording. In a two-head type helical scan VTR, a recording system in which an azimuth angle is provided between two heads and no guard band is provided between adjacent tracks has been commonly used.

Fig. 1 shows a recorded pattern for a PAL/SECAM signal VTR where $\alpha_H=1.5$;

Figs. 2, 3 and 4 show reproduced loci in still, fast forward and reverse reproduction modes, respectively, where $\alpha_H=1.5$;

Fig. 5 shows a basic block diagram of signal processing for a VHS system PAL/SECAM signal VTR;

Fig. 6 shows a recorded locus for a PAL/SECAM signal VTR where $\alpha_H=0.75$;

Figs. 7, 8 and 9 show reproduced loci in still, fast forward and reverse reproduction modes, respectively, where $\alpha_H=0.75$;

Figs. 10, 11 and 12 show sequences and envelope waveforms of horizontal synchronizing signals and chrominance signals for the cases of Figs. 7, 8 and 9, respectively;

Fig. 13 shows a block diagram of one embodiment where $\alpha_H=0.75$;

Fig. 14 shows waveforms in the circuit of Fig. 13;

Figs. 15 and 16 show block diagrams of another embodiment of the present invention;

Fig. 17 shows recorded loci where $\alpha_H=0.75$ and one of the heads is offset from the 180° line by an angle corresponding to 0.75 H;

Fig. 18 shows recorded loci of a PAL/SECAM signal VTR where $\alpha_H=1.0$;

Figs. 19, 20 and 21 show reproduced loci in the still, fast forward and reverse reproduction modes, respectively, where $\alpha_H=1.0$;

Figs. 22, 23 and 24 show the sequences of the horizontal signals and the chrominance signals and envelope waveforms in the reproduction modes shown in Figs. 19, 20 and 21;

Figs. 25 and 26 show block diagrams of one embodiment of a signal processing circuit for a PAL/SECAM signal VTR in accordance with the present invention where $\alpha_H=1.0$;

Figs. 27 and 28 show waveforms in a control signal generator in accordance with the present invention;

Fig. 29 shows a block diagram of another embodiment of the signal processing circuit of the PAL system VTR where $\alpha_H=1.0$;

Fig. 30 shows waveforms in a control signal generator in the embodiment shown in Fig. 29;

Fig. 31 shows a block diagram of another embodiment of the PAL system VTR where $\alpha_H=1.0$; and

Fig. 32 shows waveforms in a control signal generator in the embodiment shown in Fig. 31.

Fig. 1 shows a recorded pattern of a VHS system PAL/SECAM signal VTR. In Fig. 1 I-A, I-B, II-A, II-B, . . . . . represent record tracks, in which I-A, II-A, III-A, . . . . . show loci drawn by a head A while I-B, II-B, III-B, . . . . . show loci drawn by a head B with an azimuth angle of ±6° (not shown) between the head A and the head B. I-1, I-2, I-3, . . . . . represent line numbers with symbols R and B representing chrominance signals in the corresponding lines. For a PAL signal, phase of a R-Y signal is reversed for each line with R representing a positive R-Y signal and B representing a negative R-Y signal. For a SECAM signal, the R-Y signal and the B-Y signal are transmitted alternately for each line with R representing the transmission of the R-Y signal and B representing the B-Y signal. A symbol $\alpha_H$ represents the amount of offset (in terms of line periods H) of a horizontal synchronizing signal between adjacent tracks. In the VHS system PAL/SECAM signal VTR, $\alpha_H$ is set to 1.5. Under this condition, a track pitch $T_P$ is equal to 49 $\mu$m and a tape speed is equal to 23.4 mm/second.

In the VHS system PAL/SECAM signal VTR, the horizontal synchronizing signals of the ajdacent tracks are arranged side by side and the adjacent chrominance signals are also arranged side by side. That is, R is next to R, and B is next to B.

A special reproduction mode (still, slow motion, fast forward and reverse reproduction modes) in such a VTR is now explained. Figs. 2, 3 and 4 show loci of the heads in the still reproduction mode, fast forward reproduction mode and reverse reproduction mode, respectively, in which Ⓐ represents a reproduced locus by the head A and Ⓑ represents a reproduced locus by the head B. In Fig. 2, the heads A and B draw the same locus. Since the azimuth angle is provided between the head A and the head B as described above, the head A reproduces only the signal of the locus drawn by the head A and the head B reproduces only the signal of the locus drawn by the head B. Accordingly, in Figs. 2 to 4, the signals in the hatched areas are reproduced. In Fig. 2, the head A reproduces the signal in the hatched area Ⓐ and the head B reproduces the signal in the hatched area Ⓑ. In the special reproduction mode, the recorded locus is jumped during a reproduction cycle by one head or the signal sequence is different from that of normal reproduction mode when the heads are switched from one to the other. Those conditions are classified as follows:

1) During one reproduction cycle by one head, the locus is jumped two recorded loci ahead (in the fast forward reproduction mode).

[In Fig. 3, the locus is jumped from the locus I-A to the locus II-A for the head A, and from the locus III-B to the locus IV-B for the head B.]

2) In the switching of the heads, the locus is jumped to one recorded locus ahead (in the still, slow motion, fast forward and reverse reproduction modes).

[In Fig. 2, the locus is jumped from the locus I-B for the head B to the locus II-A for the head A, and in Fig. 4 the locus is jumped from the locus III-A for the head A to the locus III-B for the head B.]

3) In the switching of the heads, the locus is jumped three recorded locus ahead (in the fast forward reproduction mode).

[In Fig. 3, the locus is jumped from the locus II-A for the head A to the locus III-B for the head B.]

4) In the switching of the heads, the locus is jumped one locus behind (in the still, slow and reverse reproduction modes).

[In Fig. 2, the locus is jumped from the locus II-A for the head A to the locus I-B for the head B, and in Fig. 4 the locus is jumped from the locus II-B for the head B to the locus II-A for the head A.]

5) During one reproduction cycle by one head, the locus is jumped two recorded loci behind (in the still, slow and reverse reproduction modes).

[In Fig. 4, the locus is jumped from the locus IV-A for the head A to the locus III-A, from the locus II-A to the locus I-A, and from the locus III-B for the head B to the locus II-B.]

In the above five cases, the continuity of the horizontal synchronizing signal and the continuity of the chrominance signal are important. If the continuity of the horizontal synchronizing signal is lacked, a skew distortion appears on the image screen. The continuity of the chrominance signal is discussed below. In the PAL/SECAM signal, the chrominance signal is switched for each line. In the PAL system, the phase of the carrier wave for the R-Y signal is reversed for each line, and in the SECAM system the R-Y signal and the B-Y signal are alternately transmitted for each line. Accordingly, if the sequence of the chrominance signals is reversed in the middle or the beginning of a field, a chrominance discrimination circuit of a television receiver operates improperly or takes long time for pull-in so that the color does not appear on the picture image or color phase is disturbed in the middle or top of the picture image.

The above five cases are discussed for a VTR for the recorded pattern shown in Fig. 1. Since one field is recorded in each track in the recorded pattern of Fig. 1, the number $t_H$ of lines recorded in one track is equal to 312.5. In the case 1) and 5), since the horizontal synchronizing signals and the chrominance signals are arranged side by sides in the recorded pattern, the continuity of the horizontal synchronizing signal and the continuity of the chrominance signal are maintained. In the case 2), since the switching of the heads is effected in the exactly same manner as the normal reproduction mode, the continuity of the horizontal synchronizing signal and the continuity of the chrominance signal are maintained. In the case 3), the signal reproduced in the switching of the heads is skipped by two tracks plus 2 $\alpha_H$ lines. In the jump from II-A to III-B in Fig. 3, the tracks II-B and III-A, and the lines II-312 and II-313 (1/2 line) of the track II-A and the lines III-313 (1/2 line) and III-314 of the track III-B are skipped so that the line is jumped from the line II-311 to the line III-315. Accordingly, the total number of lines skipped is equal to $2t_H+2\alpha_H=628$ (where $\alpha_H=1.5t_H=312.5$). Since this number is an even number, the continuity of the horizontal synchronizing signal and the continuity of the chrominance signal are maintained. In the case 4), in the switching of the heads, the signal reproduced is jumped one track behind and $2\alpha_H$ lines behind. In the jump from II-A to I-B in Fig. 2, it jumps from the line II-314 in the track II-A to the line I-312 in the track I-B. That is, it jumps back by $2t_H+2\alpha_H=628$ lines. In the jump from the track II-B to the track II-A in Fig. 4, it also jumps back by $2t_H+2\alpha_H=628$ lines. Since those numbers are even, the continuity of the horizontal synchronizing signal and the continuity of the chrominance signal are maintained.

Thus, in the VTR for the recorded pattern as shown in Fig. 1, the continuity of the horizontal synchronizing signal and the continuity of the chrominance signal are always maintained even in the special reproduction mode.

Referring to Fig. 5, a basic block diagram for the signal processing of the VHS system PAL/SECAM signal VTR is briefly explained. In Fig. 5, numeral 1 denotes a video signal input terminal, 2 a low-pass filter, 3 a band-pass filter, 4 a frequency modulator, 5 a frequency converter, 6 an adder, 7 a head, 8 a high-pass filter, 9 a low-pass filter, 10 a frequency demodulator, 11 a frequency converter, 12 an adder and 13 a video signal output terminal. A video signal applied to the input terminal 1 is fed to the low-pass filter 2 and the band-pass filter 3 where it is divided into a brightness signal and a carrier chrominance signal. The brightness signal is frequency modulated in the frequency modulator 4 and then fed to the adder 6. On the other hand, the carrier chrominance signal is converted to a low frequency signal in the frequency converter 5 and it is superimposed on the frequency modulated wave in the adder 6 for recording on a tape by the head 7. During the low frequency conversion, the signal is processed in accordance with the PAL system or the SECAM system. The signal reproduced by the head 7 is fed to the high-pass filter 8 and the low-pass filter 9 where it is separated to a frequency modulated wave of the brightness signal and a low frequency converted carrier chrominance signal. The frequency modulated wave is fed to the frequency demodulator 10 where it is demodulated to produce a reproduced brightness signal, which is fed to the adder 12. On the other hand, the low frequency converted carrier chrominance signal is reconverted to the initial frequency signal by the frequency converter 11 and it is combined with the reproduced brightness signal in the adder 12 to reproduce a video signal at the output terminal 13. In the course of reconverting the carrier chrominance signal to the original frequency signal in the frequency converter 11, the signal is processed in accordance with the PAL system or the SECAM system.

The present invention provides apparatus for maintaining the continuities of the horizontal synchronizing signal and the chrominance signal in the special reproduction made by increasing the density of the pattern shown in Fig. 1 or changing it to a different pattern.

As explained in conjunction with Figs. 2 to 4, there are five cases in which the discontinuity of the signal may occur in the special reproduction mode. The $\alpha_H$ and the continuities of the horizontal synchronizing signal and the chrominance signal for a given pattern are explained for each of the above cases. In the case 1), in the switching of the track, the signal jumps $2t_H+2\alpha_H$ lines ahead. In the case 5), it jumps $2t_H+2\alpha_H$ lines behind. In the switching of the head, in the case 2), the signal jumps in the exactly same manner as the normal reproduction mode so that the continuities of the horizontal synchronizing signal and the chrominance signal are maintained for any pattern. In the case of 3), the signal jumps $2t_H+2\alpha_H$ lines ahead, and in the case of 4) it jumps $2t_H+2\alpha_H$ lines behind. Accordingly, the requirement for the continuity of the horizontal synchronizing signal under those conditions is that the number of lines skipped ahead or behind is an integer, that is, $2t_H+2\alpha_H$ is an integer. That is

$$t_H+\alpha_H=k/2 \text{ (where k is an integer)}$$

In the system in which one field is recorded in each track,

$$\alpha_H=n/2 \text{ (where n is an integer)}$$

The requirement for the continuity of the chrominance signal is that $2t_H+2\alpha_H$ is an even number, that is, $t_H+\alpha_H$ is an integer. That is,

$$t_H+\alpha_H=k \text{ (where k is an integer)}$$

In the system in which one field is recorded in each track,

$$\alpha_H=(2n+1)/2 \text{ (where n is an integer)}$$

When $t_H+\alpha_H=(2k+1)/2$, the continuity of the horizontal synchronizing signal is maintained in the special reproduction mode although the continuity of the chrominance signal is not maintained, and the compensation for the discontinuity of the chrominance signal in the special reproduction mode is relatively easy to attain. When $t_H+\alpha_H=(2k+1)/2$ and the one field per track recording system is used, $\alpha_H=n$ (where n is an integer).

Thus, in the one field per track recording system, if a recording density is increased over that of the recorded pattern shown in Fig. 1, a pattern which can maintain the continuities of the horizontal synchronizing signal and the chrominance signal in the special reproduction mode is obtained only when $\alpha_H=0.5$. In the case of $\alpha_H=0.5$, however, the tape speed is 7.8 mm/second and the track pitch $T_p$ is 16 $\mu$m, which extremely degrade the qualities of sound and picture. On the other hand, when $\alpha_H=1.0$ (the tape speed is 15.6 mm/second and the track pitch $T_p$ is 32 $\mu$m), the requirement for the continuity of the horizontal synchronizing signal in the special reproduction mode is met but the requirement for the continuity of the chrominance signal is not met. This equally applies to the cases where $\alpha_H$ is an integer.

The prior art requirement for the continuity of the chrominance signal is that $t_H+\alpha_H$ is an integer. When $t_H+\alpha_H$ is not an integer, the continuity of the horizontal synchronizing signal is maintained in the special reproduction mode but the continuity of the chrominance signal is not maintained. This invention provides an apparatus for maintaining both the continuities of the horizontal synchronizing signal and the chrominance signal in the special reproduction mode when $t_H+\alpha_H$ is not an integer.

The present invention provides apparatus for maintaining the continuities of the horizontal synchronizing signal and the chrominance signal in the special reproduction mode for any recorded pattern in which $t_H+\alpha_H\neq k$. Specifically described below in a method for maintaining the continuity in the one field per track recording system for the pattern of $\alpha_H=n$ (where n is an integer) including the case of $\alpha_H=1.0$ and any pattern of $\alpha_H\neq n/2$ including the case of $\alpha_H=0.75$ (where the tape speed is reduced to one half) for high density recording. In the following description, the one field per track recording system is considered unless otherwise specified.

An example of the occurrence of the discontinuity of the horizontal synchronizing signal and the chrominance signal is now explained for the case of $\alpha_H=0.75$.

Fig. 6 shows a recorded pattern where $\alpha_H=0.75$. In Fig. 6, the tracks, the lines and the chrominance signals are designated in the same manner as in Fig. 1. Figs. 7, 8 and 9 show the loci of the head in the still reproduction mode, the fast forward reproduction mode and the reverse reproduction mode, respectively, for the recorded pattern shown in Fig. 6. Figs. 10, 11 and 12 show the sequences of the horizontal synchronizing signals and the chrominance signals, and the reproduced envelope waveform, in the still reproduction mode, the fast forward reproduction mode and the reverse reproduction mode, respectively. Figs. 7, 8 and 9 correspond to Figs. 2, 3 and 4, respectively, where $\alpha_H$=1.5 and the symbols designate in the same way. In the recorded pattern where $\alpha_H \neq n/2$, the continuities of the horizontal synchronizing signal and the chrominance signal are not maintained in the special reproduction mode except the case 2). Those special reproduction modes are considered with reference to Figs. 7 to 12. The case of 1) of the special reproduction mode corresponds to the fast forward reproduction mode in Figs. 8 and 11 in which the head A moves from the hatched track I-A to the track II-A (at point *a* in Fig. 11) and the head B moves from the track III-B to the track IV-B (at point *b* in Fig. 11). In this case, since the horizontal synchronizing signals and the chrominance signals are not arranged side by side, respectively, in the tracks A and in the tracks B, the discontinuities occur. The number of lines skipped at the discontinuity point is equal to $2t_H+2\alpha_H$=626.5 (where $\alpha_H$=0.75 and $t_H$=312.5) as described above. At the point *a* in Fig. 11, the skip occurs from the middle of the line I-3 (R) to the middle of the line II-4 (R), and at the point *b* the skip occurs from the middle of the line III-622 (B) to the middle of the line IV-623 (B). The space between the horizontal synchronizing signals in the skip is equal to 0.5 H (where H is a unit of line period). As to the chrominance signals, they are spaced by 0.5 H at the point *a* where the skip occurs from the line I-2 (B) to the line II-5 (B), and spaced by 0.5 H at the point *b* where the skip occurs from the line III-621 (R) to the line IV-624 (R). In any case, the chrominance signal after the discontinuity point is in advance by 0.5 H (retarded by 1.5 H) with respect to the chrominance signal before the discontinuity signal, to compare with the case where the continuity is maintained. The case 3) corresponds to a switching point (point *c* in Fig. 11) from the locus II-A of the head A to the locus III-B of the head B in Figs. 8 and 11. In this case, the number of lines skipped is 625.5 lines (=$2t_H+2\alpha_H$, where $\alpha_H$=0.75 and $t_H$=312.5) or those lines from the last one quarter of the line II-312 to the first one quater of the line III-314. Thus, like the case 1) above, the discontinuity takes place. At the point *c* where the skip occurs from the end of the line II-311 to the beginning of the line III-315, the horizontal synchronizing signals are spaced by 1.5 H and the chrominance signals are spaced by 1.5 H in the course of the skip from B to R. Again, like the case 1) above, the chrominance signal after the discontinuity point is advanced by 0.5 H (retarded by 1.5 H) with respect to the chrominance signal before the discontinuity point, to compare with the case where the continuity is maintained. The case 4) corresponds to the switching point (point *d* in Fig. 10) from the locus II-A of the head A to the locus I-B of the head B in Figs. 7 and 10. In this case, the skip occurs from the one quater point of the line II-314 back to the three quarter point of the line I-312, that is, the number of lines skipped back is 626.5 lines (=$2t_H+2\alpha_H$, where $\alpha_H$=0.75 and $t_H$=312.5). At the point *d* where the skip occurs from the end of the line II-313 to the beginning of the line I-313, the horizontal synchronizing signals are spaced by 0.5 H and the chrominance signals are spaced by 0.5 H in the course of the skip from B to R. The chrominance signal after the discontinuity point is advanced by 1.5 H (retarded by 0.5 H) with respect to the chrominance signal before the discontinuity signal, to compare with the case where the continuity is maintained. The case 5) above corresponds to the switch (at point *e* in Fig. 12) from the locus IV-A of the head A to the locus III-A, the switch from the locus II-A to the locus I-A and the switch (at point *f* in Fig. 12) from the locus III-B of the head B to the locus II-B, in Figs. 9 and 12. Like the case 4) above, the discontinuity occurs. At the point *e* where the switch occurs from the end of the line IV-311 to the beginning of the line III-312, the horizontal synchronizing signals are spaced by 1.5 H and the chrominance signals are spaced by 1.5 H in the course of the switch from B to B. Again, like in the case 4) above, the chrominance signal after the discontinuity point is advanced by 1.5 H (retarded by 0.5 H) with respect to the chrominance signal after the discontinuity point, to compare with the case where the continuity is maintained. The same is true for the point *f*.

The conditions at the discontinuity point discussed above may be generalized as follows. When the number of lines included in one track is given by $t_H$($t_H$=312.5 in the previous examples), $2(t_H+\alpha_H)$ lines are skipped forward in the cases 1) and 3) of the special reproduction mode, and $2(t_H+\alpha_H)$ lines are skipped backward in the cases 4) and 5). If the number $2(t_H+\alpha_H)$ of lines skipped forward or backward is an integer, the horizontal synchronizing signal is continuous at that point, and if it is an even number of chrominance signal is also continuous. Accordingly, the cases 1) and 3) are equivalent to the case where the horizontal synchronizing signal is skipped by $[2(t_H+\alpha_H)-m]$ lines (where m is an integer) at the track switching point and the chrominance signal is skipped by $[2(t_H+\alpha_H)-2l]$ lines (where l is an integer). The case 4) is equivalent to the case where the horizontal synchronizing signal is skipped back by $[2(t_H+\alpha_H)-m]$ lines and the chrominance signal is skipped back by $[2(t_H+\alpha_H)-2l]$ lines. This means that in the cases 1) and 3) the horizontal synchronizing signal after the discontinuity point is advanced by $[2(t_H+\alpha_H)-m]$ lines with respect to the horizontal synchronizing signal before the discontinuity point and the chrominance signal after the discontinuity signal is advanced by $[2(t_H+\alpha_H)-2l]$ lines. For

the cases 4) and 5), it means that the signals after the discontinuity point are retarded by $[2(t_H+\alpha_H)-m]$ lines for the horizontal synchronizing signal and by $[2(t_H+\alpha_H)-2l]$ lines for the chrominance signal, with respect to the signals before the discontinuity point. When this is applied to the case where $\alpha_H=0.75$, $2(t_H+\alpha_H)$ is equal to 626.5 and assuming that m=626 and 2l=626, the horizontal synchronizing signal is advanced by 0.5 H and the chrominance signal is advanced by 0.5 H after the discontinuity point in the cases 1) and 3), and the horizontal signal is retarded by 0.5 H and the chrominance signal is retarded by 0.5 H after the discontinuity point in the cases 4) and 5). This corresponds to the results obtained above.

Considering a pattern where $\alpha_H=5/6$; $2(t_H+\alpha_H)$ is equal to 626+2/3. When m=626 and 2l=626, the horizontal synchronizing signal and the chrominance signal advance by (2/3) H after the discontinuity point in the cases 1) and 3), and they retard by (2/3) H in the cases 4) and 5).

In the pattern in which $\alpha_H=1.0$, $2(t_H+\alpha_H)$ is equal to 627 and assuming that m=627 and 2l=626, the horizontal synchronizing signal is advanced by zero H (that is, the continuity is not destroyed) and the chrominance signal is advanced by 1.0 H after the discontinuity point in the cases 1) and 3), and the horizontal synchronizing signal is retarded by zero H (that is, the discontinuity is not destroyed) and the chrominance signal is retarded by 1.0 H after the discontinuity point in the cases 4) and 5).

Thus, when $\alpha_H=0.75$, the horizontal synchronizing signal and the chrominance signal are advanced by 0.5 H after the discontinuity point in the cases 1) and 3). Accordingly, the continuity is maintained by delaying the both signals after the discontinuity point by 0.5 H. In the cases 4) and 5), both signals are retarded by 0.5 H. Accordingly, the continuity is maintained by advancing the both signals after the discontinuity point by 0.5 H. When $\alpha_H=5/6$, the continuity of both signals is maintained by retarding both signals after the discontinuity point by 2/3 H in the cases 1) and 3) and advancing both signals after the discontinuity point by 2/3 H in the cases 4) and 5). When $\alpha_H=1.0$, the continuity of the horizontal synchronizing signal is not lost in any case of the cases 1), 3), 4) and 5). Accordingly, the continuity is maintained by retarding only the chrominance signal by 1.0 H in the cases 1) and 3) and also retarding it by 1.0 H (which is equivalent to advance by 1.0 H) in the cases 4) and 5).

Based on the consideration given above, the present invention provides apparatus for maintaining the continuities of the horizontal synchronizing signal and the chrominance signal in the special reproduction mode for patterns of any $\alpha_H$ where $t_H+\alpha_H\neq k$. One embodiment where $\alpha_H=0.75$ is shown in Fig. 13 and waveforms in the circuit of Fig. 13 are shown in Fig. 14. In Fig. 13, numerals 1—13 denote the same elements as those shown in Fig. 5 and they function in the same manner. Numeral 14 denotes a 0.5 H delay line, 15 a switch, 16 a 0.5 H delay line, 17 a 1.0 H delay line, 18 a 1.5 H delay line, 19 a switch, 20 an envelope detector, 21 a pulse generator, 22 and 23 flip-flops, and 24 a reproduction mode identification signal input terminal. Numerals 25—(29-2) of the signal waveforms shown in Fig. 14 correspond to the numerals shown in Fig. 13. The waveforms (29-1) and (29-2) correspond to the waveform 29 in the fast forward reproduction mode and the slow, still and reverse reproduction modes, respectively. The reproduced and demodulated brightness signal (the output signal of the frequency demodulator 10) is applied to terminals $a_1$ and $a_2$ of the switch 15 directly and through the 0.5 H delay line 14, respectively. On the other hand, the reproduced chrominance signal which has been reconverted to the original frequency (the output signal of the frequency converter 11) is applied to terminals $b_1$, $b_2$, $b_3$ and $b_4$ of the switch 19 directly and through the 0.5 H delay line 16, the 1.0 H delay line 17 and the 1.5 H delay line 18, respectively. The switches 15 and 19 are controlled by the output signals of the flip-flops 22 and 23. The brightness signal at the output of the switch 15 and the chrominance signal at the output of the switch 19 are combined in the adder 12 which produces a reproduced video signal at the output terminal 13. As shown in Figs. 10—12, the envelope of the reproduced signal falls at the points where the discontinuity of the horizontal synchronizing signal and the chrominance signal occur in the special reproduction mode. Accordingly, by applying the reproduced signal 25 from the head 7 to the envelope detector 20 and detecting the envelope, the signal 26 is produced. The signal 26 is then fed to the pulse generator 21 which produces pulse signals 27 which indicate the falling points of the envelope, that is, the discontinuity points of the horizontal synchronizing signal and the chrominance signal. The signals 27 are applied to the flip-flop 22 which produces a switching control signal 28 which in turn is fed to the flip-flop 23, which produces a switching control signal 29. The switch 15 is controlled by the signal 28 so that it selects the terminal $a_1$ when the signal 28 is LOW and the terminal $a_2$ when the signal 28 is HIGH. The switch 19 is controlled by the signals 28 and 29 so that it selects the terminals in the following manner.

| Signal 28 | Signal 29 | Terminal Selected |
|---|---|---|
| LOW | LOW | $b_1$ |
| HIGH | LOW | $b_2$ |
| LOW | HIGH | $b_3$ |
| HIGH | HIGH | $b_4$ |

applied to the terminal 24 is a signal for identifying 1) normal reproduction mode, 2) fast forward reproduction mode and 3) slow motion, still and reverse reproduction mode. The flip-flops 22 and 23 are controlled such that the signals 28 and 29 are both LOW in the normal reproduction mode (1), the signals 28 and 29 have a relationship as shown by 29-1 in Fig. 14 (the flip-flop 23 is driven by the fall of the signal 28) in 2) fast forward reproduction mode (2), and the signals 28 and 29 have a relationship as shown by 29-2 in Fig. 14 (the flip-flop 23 is driven by the rise of the signal 28) in the slow, still and reverse reproduction mode (3). Thus, in the normal reproduction mode (1), the switch 15 always selects the terminal $a_1$ and the switch 19 always selects the terminal $b_1$ so that the exactly same reproduced video signal as that in the case of Fig. 5 is produced at the output terminal 13. In the fast forward reproduction mode (2), the switches 15 and 19 selects the terminals in a manner shown in the table below during the periods 30—34 shown in Fig. 14.

| Period | Switch 15 (Brightness signal delay) | Switch 19 (Chrominance signal delay) |
|---|---|---|
| 30 | $a_1$ (0) | $b_1$ (0) |
| 31 | $a_2$ (0.5 H) | $b_2$ (0.5 H) |
| 32 | $a_1$ (0) | $b_3$ (1.0 H) |
| 33 | $a_2$ (0.5 H) | $b_4$ (1.5 H) |
| 34 | $a_1$ (0) | $b_1$ (0) |

Thus, at every discontinuity point, the brightness signal is delayed by 0.5 H (1 H delay being equivalent to zero delay) and the chrominance signal is delayed by 0.5 H (2 H delay being equivalent to zero delay). In the cases 1) and 3) of the special reproduction mode where $\alpha_h$=0.75, and horizontal synchronizing signal is advanced by 0.5 H and the chrominance signal is advanced by 0.5 H at every discontinuity point and the discontinuity point in the fast forward reproduction mode corresponds to the case 1) or case 3). Accordingly, the continuities of the horizontal synchronizing signal and the chrominance signal can be maintained by the switching operation described above. In the slow, still and reverse reproduction mode (3), the switches 15 and 19 select the terminals in a manner shown in the table below during the periods 30—34 shown in Fig. 14.

| Period | Switch 15 (Brightness signal delay) | Switch 19 (Chrominance signal delay) |
|---|---|---|
| 30 | $a_1$ (0) | $b_1$ (0) |
| 31 | $a_2$ (0.5 H) | $b_4$ (1.5 H) |
| 32 | $a_1$ (0) | $b_3$ (1.0 H) |
| 33 | $a_2$ (0.5 H) | $b_2$ (0.5 H) |
| 34 | $a_1$ (0) | $b_1$ (0) |

Thus, at every discontinuity point, the brightness signal is advanced by 0.5 H (1 H advancement being equivalent to zero advancement) and the chrominance signal is advanced by 0.5 H (2 H advancement being equal to zero advancement, that is, 1.5 H delay being equivalent to 0.5 H advancement). In the cases 4) and 5) of the special reproduction mode where $\alpha_H$=0.75, the horizontal synchronizing signal is retarded by 0.5 H and the chrominance signal is retarded by 0.5 H at every discontinuity point and the discontinuity point in the slow, still and reverse reproduction mode corresponds to the case 4) or case 5). Accordingly, the continuities of the horizontal synchronizing signal and the chrominance signal can be maintained by the switching operation described above. Thus, proper horizontal synchronizing signal and proper chrominance signal can be reproduced in any case of the special reproduction mode.

In the embodiment shown in Fig. 13, the brightness signal is delayed by zero or 0.5 H and the chrominance signal is delayed by 0, 0.5 H, 1.0 H or 1.5 H. The brightness signal may be delayed an integer multiple of H more and the chrominance signal may be delayed an integer multiple of 2 H more. Alternatively, the delays may be such that the relative delays in the periods 30—34 meet the requirement that a difference of delay between the brightness signal and the chrominance signal is equal to an integer multiple of 1 H (e.g. the brightness signal is delayed by 0.3 H and 0.8 H or an integer multiple of 1 H more and the chrominance signal is delayed by 0.3 H, 0.8 H, 1.3 H and 1.8 H or an integer multiple of 2 H more). When the delays of the brightness signal and the chrominance signal are equal, vertical offset of the brightness signal and the chrominance signal is eliminated. The positions at which the brightness signal and the chrominance signal are delayed need not be limited to those shown in Fig. 13. The brightness signal may be delayed at the input or the output of the high-pass filter 8 or it may be delayed by modulating the demodulated signal with a high frequency signal. Alternatively, the brightness signal and the chrominance signal may be simultaneously delayed at the output of the head 7, or the demodulated brightness signal and the frequency-reconverted chrominance signal may be combined in the adder 12 and the combined signal may be delayed directly or after being modulated with a high frequency signal, or a portion of the brightness signal and the chrominance signal may be delayed and the portion of the chrominance signal may be further delayed.

In the embodiment shown in Fig. 13, the case where $\alpha_H$=0.75 is considered. The present invention is applicable to any $\alpha_H$ ($t_H+\alpha_H \neq k$) so long as the delays of the brightness signal and the chrominance signal and the switching operation of the delays are properly selected. For example, for the pattern where $\alpha_H$=5/6, the switching operation may be carried out in the manner shown in Fig. 15. In Fig. 15, numerals 10—13, 21 and 24 denote the same elements as those shown in Fig. 13. Numeral 35 denotes a 2/3 H delay line and numeral 36 denotes a 1/3 H delay line. They correspond to the delay line 14 shown in Fig. 13. Numeral 37 denotes a switch which corresponds to the switch 15. Numeral 38 denotes a 2/3 H delay line and numeral 39 denotes a 4/3 H delay line. They correspond to the delay lines 16—18. Numeral 40 denotes a switch which corresponds to the switch 19. Numeral 41 denotes a counter which corresponds to the flip-flops 22 and 23. As described above, when $\alpha_H$=5/6, the horizontal synchronizing signal and the chrominance signal are advanced by 2/3 H at every discontinuity point in the fast forward reproduction mode. Accordingly, by selecting the terminals of the switches 37 and 40 in the sequence of $c_1$, $c_2$, $c_3$, $c_1$, ..... and $d_1$, $d_2$, $d_3$, $d_1$, ..... by the output signals of the counter 41, the horizontal synchronizing signal and the chrominance signal which are continuous to the outputs of the switches can be produced. In the slow, still and reverse reproduction modes, the signals are retarded by 2/3 H at every discontinuity point. Accordingly, by selecting the terminals of the switches 37 and 40 in the sequence of $c_1$, $c_2$, $c_3$, $c_1$, ..... and $d_1$, $d_2$, $d_3$, $d_1$, ..... by the output signals of the counter 41, the horizontal synchronizing signal and the chrominance signal which are continuous to the outputs of the switches can be produced. In the slow, still and reverse reproduction modes, the signals are delayed by 2/3 H at every discontinuity point. Accordingly, by selecting the terminals of the switches 37 and 40 in the sequence of $c_3$, $c_2$, $c_1$, $c_3$, ..... and $d_3$, $d_2$, $d_1$, $d_3$, ..... by the output signals of the counter 41, the continuous signals can be produced. The counter 41 is controlled by the reproduction mode identification signal applied to the terminal 24 so that in the normal reproduction mode the switches 37 and 40 always select the control signals at the terminals $c_1$ and $d_1$ and in the special reproduction mode they select the control signals for affecting the switching operations described above, as the case may be. When $\alpha_H$=5/6, a modification similar to that described for the case of $\alpha_H$=0.75 is possible.

Assuming that the number of lines per track is $t_H$ for any $\alpha_H$, the switching in the fast forward reproduction mode may be effected such that the brightness signal is retarded by $[2(t_H+\alpha_H)-m]$ lines and the chrominance signal is retarded by $[2(t_H+\alpha_H)-2l]$ lines at every discontinuity point and the switching in the slow, still and reverse reproduction modes may be effected such that the brightness signal is advanced by $[2(t_H+\alpha_H)-m]$ lines and chrominance signal is advanced by $[2(t_H+\alpha_H)-2l]$ lines at every discontinuity point.

Fig. 16 shows another modification for delaying the signal. In Fig. 16, numerals 10—13, 21, 24 and 41 denote the same elements as those shown in Fig. 15. Numerals 42 and 43 denote variable delay lines and numerals 44 and 45 denote control signal generators. In the normal reproduction mode, the counter 41 is controlled by the reproduction mode identification signal applied to the terminal 24 so that the output signals of the control signal generators 44 and 45 function to maintain the delays of the variable delay lines 42 and 43 at zero or constant delays. In the fast forward reproduction mode, the counter 41 responds to the signal applied to the terminal 24 to count up the output signals (27 in Fig. 14) of the pulse generator 21 so that the output signal of the control signal generator 44 functions to increment the delay of the variable delay line 42 by $[2(t_H+\alpha_H)-m]$ lines each time the pulse generator 21 generates a pulse. The delay may be reset before the delay exceeds 1 H. The output signal of the control signal generator 45 functions to increment the delay of the variable delay line 43 by $[2(t_H+\alpha_H)-2l]$ lines each time the pulse generator 21 generates a pulse. The delay may be reset before the delay exceeds 2 H. In this manner, in the fast forward reproduction mode, the brightness signal is delayed by $[2(t_H+\alpha_H)-m]$ lines and the chrominance signal is delayed by $[2(t_H+\alpha_H)-2l]$ lines at every discontinuity point so that the continuous signals are produced at the output terminal 13. In the slow, still and reverse reproduction modes, in response to the signal applied to the terminal 24, the delay of the variable delay line 42 is decremented by $[2(t_H+\alpha_H)-m]$ lines and the delay of the variable delay line 43 is decremented by $[2(t_H+\alpha_H)-2l]$ lines each time the pulse generator 21 generates a pulse. in this manner, the continuous signals are produced at the output terminal 13.

The explanation set forth above refers to the case where two heads are arranged at the angle of 180° to each other. When one of the heads is offset from the 180° line so that the signals on the adjacent two tracks are arranged side by side, the explanation set forth above is equally applicable because the loci recorded by the head A are reproduced by only the head A and the loci recorded by the head B are reproduced by only the head B. It is also applicable when one of the heads is offset by any angle. Fig. 17 shows a tape pattern when one of the heads is offset from the 180° line by an angle corresponding to 0.75 H and $\alpha_H$=0.75.

The explanation set forth above refers to the patterns where the direction of head rotation in the normal reproduction mode and the direction of tape travel are same. When the directions are opposite to each other, $\alpha_H$ is negative and the explanation set forth above is equally applicable.

Fig. 18 shows a recorded pattern where $\alpha_H$=1.0. In Fig. 18, numerals of the tracks, lines and chrominance signals represent the same ones as those shown in Fig. 1. Figs. 19, 20 and 21 show head loci for that pattern in the still reproduction mode, fast forward reproduction mode and reverse reproduction mode, respectively, and Figs. 22, 23 and 24 show the positions of the horizontal synchronizing signals, the sequences of the chrominance signals in the horizontal signals and the changes in the envelope waveforms, of the reproduced signals in the still reproduction mode, fast forward reproduction mode and reverse reproduction mode, respectively. They correspond to Figs. 7—9 and Figs. 10—12 where $\alpha_H$=0.75 and the symbols denote the same things. When $\alpha_H$ is an integer, the continuity of the horizontal synchronizing signal is always maintained in the special reproduction mode as seen from the above explanation and the reproduced signal waveform but the continuity of the chrominance signal is lost in the special reproduction mode except the case 2). Therefore, the chrominance signal is delayed by 1.0 H or advanced by 1.0 H after the discontinuity point to maintain the continuity. That is, the sequence of the chrominance signal may be reversed after the discontinuity point.

Figs. 25 and 26 show block diagrams of an embodiment where $\alpha_H$=1.0. Numerals 1—13 denote the same elements at those shown in Fig. 5 and they function in the same manner. Therefore, they are not explained here. In Fig. 25, numeral 46 denotes a 1 H delay line, 47 an envelope detector, 48 a pulse generator, 49 an integrator, 50 an inhibit circuit, 51 a flip-flop, 52 a switch and 53 a reproduction mode identification signal input terminal.

The operation of the circuit is explained with reference to Fig. 27. In the reproduction operation, the reproduced brightness signal from the frequency demodulator 10 is applied to the adder 12. On the other hand, a portion of the carrier chrominance signal which has been reconverted to the original frequency by the frequency converter 11 is applied to the switch 52 directly. Another portion of the carrier chrominance signal is applied to the switch 21 through the 1 H delay line 46. A portion 54 (Fig. 27) of the reproduced carrier signal from the head amplifier is applied to the envelope detector 47 where it is detected to produce the waveform 55, which is then applied to the pulse generator 48, which produces pulses at the minimum points of the envelope, that is, at the points where the reproduced carrier signal disappears so that the waveform 56 is produced as a detection signal which indicates the time points at which the sequence of the chrominance signal changes. The waveforms 56 is applied to the integrator 49 which produces the signal waveform 57. In the reproduction operation, the signal disappears not at only one minimum point of the envelope but the envelope detector senses noises or other affects by transient at the time of the switching of the heads over several to tens horizontal scan periods around the minimum point. As a result, a number of small pulses are generated around the desired pulse 62. In order to prevent those noise pulses from occurring, the waveform 56 is applied to the integrator 49 which produces a single pulse to prevent the mulfunction in the succeeding stage. The resulting pulse 57 is applied to the inhibit circuit 50 an output of which is applied to the flip-flop 51. If the waveform 57 from the integrator 49 is directly applied to the flip-flop 51, the flip-flop 51 may mulfunction by the affect of the signal 63 which is produced in the waveform 57 by dropout or other disturbance (shown by 61 in the waveform 54). Accordingly, the inhibit circuit 50 is provided to prevent erroneous control signal from being generated. That is, during the period 64 in which the inhibit circuit 50 produces the output signal 58, the signal 63 is inhibited from being applied to the flip-flop 51. This can be attained by selecting the falling time constant of the monostable multivibrator to an appropriate valve which is related to the cycle of the falling points of the envelope. The signal 59 from the flip-flop 51 is utilized as the control signal, which is applied to the switch 52 to alternately select the non-delayed main reproduced carrier chrominance signal and the 1 H—delayed carrier chrominance signal. After the continuity of the chrominance signal has been corrected in this manner, the chrominance signal is applied to the adder 12 where it is combined with the reproduced brightness signal and the combined signal is produced at the output terminal 13 as the reproduced video signal. The above explanation relates to the special reproduction mode including the still, slow, fast forward and reverse reproduction modes. In the normal reproduction mode, the operation of the flip-flop 51 is stopped by the identification signal applied to the reproduction mode identification signal input terminal 53 so that the control signal is not generated and either one of the non-delayed main reproduced carrier chrominance signal or the 1 H—delayed carrier chrominance signal is always transmitted. In an embodiment shown in Fig. 26, a dropout compensator an embodiment shown in Fig. 26, a dropout compensator 60 is used in place of the envelope detector 47 and the pulse generator 48 shown in Fig. 25 and those pulses of the dropout detection signal which indicates the dropout periods in the dropout compensator 60 which correspond to the portions at which the sequence of the chrominance signals differs are applied to the integrator 49 to correct the sequence of the chrominance signals. The peripheral circuit is identical to that shown in Fig. 25.

Referring to Fig. 28, the control signals from the flip-flop and the manner in which the actual chrominance signals are arranged in proper continuous sequence are explained. Fig. 28 illustrates the case of fast forward reproduction mode shown in Fig. 23. The operation is similar for the other special reproduction mode.

The waveform 65 shows the change of envelope of the reproduced carrier. At the portions a, c, b and g at which the sequence of the chrominance signals differs, that is, at the falling points of the envelope waveform, the control signal 66 is produced from the flip-flop as explained above. The chrominance signal sequence for the non-delayed main reproduced carrier chrominance signal is shown by 67, the chrominance signal sequence for the 1 H—delayed carrier chrominance signal is shown by 68, and the carrier chrominance signal output 1 which has been corrected for the chrominance signal sequence is shown by 69. The carrier chrominance signal output 1 (69) is explained below. Let us assume that the main signal is selected until the first discontinuity point *a*, the delayed signal is then selected until the second discontinuity point *c*, the main signal is then selected until the third discontinuity point *b*, the delayed signal is then selected until the fourth discontinuity point *g* and thereafter the signals are alternately selected. The requirement for the continuity of the chrominance signal sequence is that either odd-numbered lines or the even-numbered lines in the overall stream of the chrominance signal sequence are fixed to either R or B such as R, B, R, B, R, B, . . . . . for each line. Accordingly, assuming that the line including the first discontinuity point *a* is R and the line including the point *a'* is B, the chrominance signal sequence around that meets the requirement for the continuity of the chrominance signal. Actually, the line including the point *a* and the line including the point *a'* include information of both R and B and hence proper color phase does not appear on the television. However, since this occurs only for two line periods and it is of no problem when it is visually sensed. The lines including the second discontinuity point *c* are both B and the chrominance signal sequence of the lines around those lines is also proper. Assuming that the line including the third discontinuity point *b* is R and the line including the point *b'* is B, it meets the requirement like in the case of the first discontinuity point. Although the color phase is abnormal for only two line periods, it does not pose a problem. The lines including the fourth discontinuity point *g* are both B and the chrominance signal sequence around those lines are proper.

As described above, the chrominance signal sequence is continuous as a whole although the lines of abnormal color phase are partially included. The carrier chrominance signal output 2 designated 70 shows a case where the relationship between the control signal and the switching is opposite to that of 69. The delayed signal is selected until the first discontinuity point *a*, the main signal is then selected until the second discontinuity point *c*, the delayed signal is then selected until the third discontinuity point *b* and the main signal is then selected until the fourth discontinuity point *g* and thereafter the signals are alternately selected. In the period including the discontinuity point *a*, both lines are B and the chrominance signal sequence around those lines is proper. Assuming that the line including the second discontinuity point *c* is R and the line including the point *c'* is B, the sequence is proper except the abnormal color phase for only two line periods as is the case for the output signal 1. The lines including the third discontinuity point *b* are both B and the chrominance signal sequence around those lines are proper. Assuming that the line including the fourth discontinuity point *g* is R and the line including the point *g'* is B, the sequence is proper except the abnormality in only two line periods.

If the output of the control signal should be reversed or the switch should be operated reversely by some reason, it does not raise a problem whether the beginning of the chrominance signal sequence is the primary signal or the delayed signal because the operation by the carrier chrominance signal output 2 (70) is corrected in the same manner as in the operation by the carrier chrominance signal output 1 (69). While the fast forward reproduction mode has been explained above, the correction can be made in the still reproduction mode of Fig. 22 and the reverse reproduction mode of Fig. 24 so that the carrier chrominance signal having the continuous chrominance signal sequence can be produced.

In the embodiment explained above, the main signal is directly applied while the delayed signal is delayed by one horizontal scan period. Since the chrominance signal sequence does not change when the carrier chrominance signal is delayed by an even multiple of one horizontal scan period, the delayed signal may be delayed longer than the above period by an even multiple of one horizontal scan period. Alternatively, both carrier chrominance signals may be delayed such that a difference between the delay times is equal to an odd multiple of one horizontal scan period. For example, the main signal may be delayed by one horizontal scan period and the delayed signal may be delayed by two horizontal scan periods, or the main signal may be delayed by two horizontal scan periods while the delayed signal may be delayed by one horizontal scan cycle. In this manner, when the time difference between the two carrier chrominance signals selected is equal to an odd multiple of one horizontal scan period, the carrier chrominance signal having the continuous chrominance signal sequence can be produced. When the two heads are not arranged along the 180° line but one of the heads is offset from the 180° line so that the signals only on the two adjacent tracks are arranged side by side, the above explanation is equally applicable because the loci recorded by the head A are reproduced only by the head A and the loci recorded by the head B are reproduced only by the head B. The above explanation is also applicable when one of the heads is offset by any angle.

The discontinuity point in the special reproduction mode can be detected by the envelope detection or the output of the dropout compensator, or both of them, as described above. For a PAL system VTR, it may be detected by an APC error signal from an APC circuit and an APC output signal. This will be explained below. This is also applicable to a pattern of $\alpha_H \neq n/2$ including $\alpha_H = 0.75$ and a pattern of $\alpha_H = n$ including $\alpha_H = 1.0$.

In the PAL system color television signal recording and reproducing apparatus, the APC error signal which is generated by the APC circuit which is one of the chrominance signal processing circuits is positive (or negative) when the phase of R-Y signal is positive (R-signal) and negative (or positive) when the phase of the R-Y signal is positive (B-signal). Thus, the polarity of the error signal changes depending on whether the R-Y signal is R-signal or B-signal. During the period in which the chrominance signal sequence is continuous, the APC error signal becomes alternately positive and negative, and at the discontinuity point of the chrominance signal the R-signal follows to the R-signal or the B-signal follows to the B-signal and the positive APC error signal follows to the positive APC error signal or the negative APC signal follows to the negative APC error signal. Thus, the signals of the same polarity are produced continuously.

In the persent embodiment, the discontinuity of the chrominance signal sequence is detected by the APC error signal to effect the reversal operation described above in order to correct the chrominance signal sequence and reproduce stable chrominance signal.

Fig. 29 shows a block diagram of one embodiment where $\alpha_H = n$. Numerals 1—13 denote the same elements as those shown in Fig. 5 and hence they are not explained here. Numeral 46 denotes a 1 H delay line, 52 a switch, 71 an APC circuit, 72 a wave reformer, 73 an AFC circuit, 74 a gate signal generator, 75 a gate circuit, 76 an integration-hold circuit, 77 a wave reformer and 78 a horizontal synchronizing signal input terminal.

The operation is now explained with reference to waveforms shown in Fig. 30. The reproduced brightness signal from the frequency demodulator 10 is applied to the adder 12. On the other hand, a portion of the reproduced carrier chrominance signal which has been reconverted to the original frequency by the frequency converter 11 is applied directly to one contact of the switch 52 and another portion of the reproduced carrier chrominance signal is applied to the other contact of the switch 52 through the 1 H delay line 46. The reproduced carrier chrominance signal not passed through the 1 H delay line 46 is called a main carrier chrominance signal and the reproduced carrier chrominance signal passed through the 1 H delay line 46 is called a delayed carrier chrominance signal. One of the main carrier chrominance signal and the delayed carrier chrominance signal is selected by the switch 52 and the selected signal is applied to the adder 12 where it is combined with the reproduced brightness signal and the combined signal is produced at the output terminal 13 as a reproduced video signal. The control signals for controlling the switch 52 are generated in the following manner. Assuming that the reproduced carrier chrominance signal shown by 301 in Fig. 30 is produced from the frequency converter 11 in the special reproduction mode, it is also applied to the APC circuit 71. In the APC error signal (302 in Fig. 30) produced by the APC circuit, the pulses of the same polarity appear continuously at the discontinuity points *h* and *i* in Fig. 30 of the chrominance signal, as explained above. The resulting APC error signal (302 in Fig. 30) is applied to the wave reformer 72 where it is converted to a stable square wave as shown by 303 in Fig. 30 and the square wave is then applied to the gate circuit 75. On the other hand, the APC output signal (304 in Fig. 30) which is in synchronism with the horizontal synchronizing signal and produced by the APC circuit 73 which is controlled by the reproduced horizontal synchronizing signal applied to the terminal 78 is applied to the gate signal generator 74, which generates a gate signal (305 in Fig. 30) having width and timing which are sufficient to gate the pulse portion of the reformed signal (303 in Fig. 30) of the APC error signal at one horizontal scan period interval. The gate signal generator 74 may be flip-flop or monostable multivibrators or any other appropriate elements. The resulting gate signal (305 in Fig. 30) is applied to the gate circuit 75, which gates the pulse portion of the reformed signal (303 in Fig. 30). The gated output signal (306 in Fig. 30) is applied to the integration-hold circuit 76 which produce the hold signal (307 in Fig. 30), which is then applied to the wave reformer 77 to produce the control signal (308 in Fig. 30). The polarity of the control signal (308 in Fig. 30) is reversed each time the discontinuity point of the chrominance signal appears. The control signal (308 in Fig. 30) functions in the same manner as the control signal 59 (Fig. 25) in the previous embodiment. Accordingly, the carrier chrominance signal having the continuous chrominance signal sequence can be produced in the still, slow, fast forward and reverse reproduction mode. In the normal operation mode, the switch 52 is controlled such that only one of the main carrier chrominance signal and the delayed carrier chrominance signal is selected.

Fig. 31 shows a block diagram of another embodiment which uses the APC error signal and the APC output signal. The numerals 1—13 denote the same elements as those shown in Fig. 5 and hence they are not explained here. Numeral 46 denotes a 1 H delay line, 52 a switch, 71 an APC circuit, 79 a wave reformer, 78 a reproduced horizontal synchronizing signal input terminal, 73 an APC circuit, 80 a data signal generator and 81 a D-type flip-flop.

The operation is now explained with reference to the waveforms shown in Fig. 32. The reproduced brightness signal from the frequency demodulator 10 is applied to the adder 12. On the other hand, a portion of the reproduced carrier chrominance signal which has been reconverted to the original frequency by the frequency converter 11 is applied directly to the switch 52 and another portion of the reproduced carrier chrominance signal is applied to the switch 52 after having been delayed by one horizontal scan period by the 1 H delay line 46. The reproduced carrier chrominance signal not passed through the 1 H delay line 46 is called the main carrier chrominance signal and the reproduced carrier chrominance signal passed through the 1 H delay line 46 is called the delayed carrier chrominance signal. Either one of the main carrier chrominance signal or the delayed carrier chrominance signal is selected by the switch 52 and the selected signal is applied to the adder 12 and the combined signal is produced at the output terminal 13 as a reproduced video signal. The control signal for controlling the switch 52 is generated in the following manner. Assuming that the reproduced carrier chrominance signal as shown by 321 in Fig. 32 is produced by the frequency converter 11 in the special reproduction mode, it is also applied to the APC circuit 71. In the APC error signal (322 in Fig. 32) produced by the APC circuit 71, the error signals of the same polarity appear continuously at the discontinuity points (*h* and *i* in Fig. 32) of the chrominance signal, as described above. The resulting APC error signal (322 in Fig. 32) is applied to the wave reformer 79, which converts it to a stable square wave (clock signal) having only positive polarity edges of the error signal as shown by 323 in Fig. 32. The square wave is then applied to a clock input terminal of the D-type flip-flop 81 (a square wave having negative edges may be used). On the other hand, the signal (324 in Fig. 32) which is in synchronism with the horizontal synchronizing signal and produced by the AFC circuit 73 which is controlled by the reproduced horizontal synchronizing signal applied to the terminal 78 is applied to the data signal generator 80, which generates a data signal (325 in Fig. 32) having width and timing which are sufficient to be read by the clock signal (323 in Fig. 32) and which is generated at two horizontal scan period interval. The data signal may be generated by flip-flops or monostable multivibrators. The generated data signal (325 in Fig. 32) is applied to a data input terminal of the D-type flip-flop 81 so that data is read by the clock signal (323 in Fig. 32). The resulting output signal is used as the control signal. In the D-type flip-flop 81, if the data is HIGH level when the data signal (325 in Fig. 32) in read by the clock signal (323 in Fig. 32), the flip-flop output is HIGH level and the initial data is retained irrespective of the input data signal until the next clock signal is applied, and if the data when the next clock signal is applied is HIGH level the output remains HIGH level and if the data is LOW level the output changes to LOW level and this output is retained until the next clock signal is applied. When the clock signal shown by 323 in Fig. 32 and the data signal shown by 325 in Fig. 32 are used, the output signal (control signal) of the flip-flop 81 appears as shown by 326 in Fig. 32. While the D-type flip-flop is used in the present embodiment to generate the control signal, any other means may be used so long as the data signal is read by the clock signal, the output is produced in accordance with the data signal, and the output does not change between one clock and the next clock irrespective of the input data signal and the initial output is retained. The resulting control signal (326 in Fig. 32) controls the switch 52 as do the signal 308 in Fig. 30 and the signal 59 in Fig. 25 to produce the continuous carrier chrominance signal in the special reproduction mode. Various methods for detecting the discontinuity point are available as described above and combination of those methods may be employed to enhance the accuracy.

While the delay lines are primarily used as the delay elements in the embodiments described above, other delay elements such as CCD may be used.

As described herein above, according to the present invention, the higher recording density than in the conventional recording and reproducing apparatus can be attained in the PAL or SECAM color television signal recording and reproducing apparatus, and high quality of color video signal and very stable television image can be produced in the normal reproduction mode as well in any case of the special reproduction mode including the still, slow, fast forward (including faster case than the illustrated embodiment) and reverse (including faster reverse mode than the illustrated embodiment) reproduction modes.

**Claims**

1. A video signal recording and reproducing apparatus wherein PAL or SECAM system color television signal is sequentially recorded and reproduced on and from oblique tracks on a recording medium having a relation of $t_H+\alpha_H \neq k$ by two heads arranged at an azimuth angle therebetween; comprising

means (20) for detecting discontinuity points of a reproduced chrominance signal or a reproduced horizontal synchronizing signal in fast forward, slow, still or reverse reproduction mode where the signals are reproduced at a travelling velocity different than a travelling velocity of said recording medium in recording operation;

means (14) for retarding a reproduced brightness signal by $[2(t_H+\alpha_H)-m]$ lines and retarding a reproduced chrominance signal by $[2(t_H+\alpha_H)-2l]$ lines with respect to the signal before the discontinuity point each time the discontinuity point is detected by said detection means in said fast forward reproduction mode; and

means (16, 17, 18) for advancing the reproduced brightness signal by $[2(t_H+\alpha_H)-m]$ lines and advancing the reproduced chrominance signal by $[2(t_H+\alpha_H)-2l]$ lines with respect to the signal before the discontinuity point each time the discontinuity point is detected by said detection means in said slow, still or reverse reproduction mode;

where

$\alpha_H$: is the offset in line periods between horizontal synchronizing signals formed on adjacent tracks when said two heads are arranged at an angle of 180° to each other;

$t_H$: is the number of lines per track; and

k, l, m: are integers.

2. A video signal recording and reproducing apparatus according to Claim 1 wherein the PAL or SECAM system color television signal is sequentially recorded and reproduced, one field of signal per track, on and from the oblique tracks on the recording medium having the relation of $\alpha_H=n$ (where n is an integer) by the two heads having the azimuth angle therebetween;

said apparatus comprising;

means (20) for detecting the discontinuity points of the reproduced carrier chrominance signal in the still, slow, fast forward or reverse reproduction mode where the signals are reproduced as a travelling velocity different than a travelling velocity of said recording medium in recording operation; and

means (46) for delaying the reproduced carrier chrominance signal by 1.0 line or different than that by even lines each time the discontinuity point is detected by said detection means.

3. A video signal recording and reproducing apparatus according to Claim 1 wherein said means (20) for detecting the discontinuity points of the reproduced carrier chrominance signal or the reproduced horizontal synchronizing signal generates a signal indicating the discontinuity point by one or more of a signal produced by detecting a change in an envelope of the reproduced signal, a phase compare error signal in an APC circuit (71) and a signal produced by detecting a discontinuity point in the horizontal synchronizing signal in the reproduced brightness signal.

4. A video signal recording and reproducing apparatus according to Claim 1 wherein said means (20) for detecting the discontinuity points of the reproduced carrier chrominance signal or the horizontal synchronizing signal generates a signal indicating the discontinuity point by an output signal from a loss-of-signal detector forming a dropout compensator.

5. A video signal recording and reproducing apparatus according to Claim 1 wherein the signal to be recorded and reproduced is the PAL system color television signal, and said means for detecting the discontinuity points of the reproduced carrier chrominance signal or the reproduced horizontal synchronizing signal produces an APC error signal in a reproduced carrier chrominance signal processing circuit and a horizontal output signal in synchronism with the horizontal synchronizing signal, said APC error signal being gated by a gate signal related to said horizontal output signal so that an APC signal is produced for each horizontal scan period, said APC signal being integrated and held.

6. A video signal recording and reproducing apparatus according to Claim 1 wherein the signal to be recorded and reproduced is the PAL system color television signal, and said means for detecting the discontinuity points of the reproduced carrier chrominance signal or the reproduced horizontal synchronizing signal produces an APC signal in a reproduced carrier chrominance signal processing circuit and a horizontal output signal in synchronism with the horizontal synchronizing signal, and a data signal related to said horizontal output signal is produced, said data signal being read by either positive or negative polarity of said APC error signal so that a signal corresponding to a level of the data signal read is produced, said signal being retained until the data signal is next read.

7. A video signal recording and reproducing apparatus according to Claim 1 wherein said means for retarding the reproduced carrier chrominance signal or the horizontal synchronizing signal integrates the signal produced by said means for detecting the discontinuity points of the reproduced carrier chrominance signal or the horizontal synchronizing signal, applies the integrated signal to an inhibit circuit, and applies the output signal of said inhibit circuit to a flip-flop to produce a signal a polarity of which is reversed each time said detection signal is produced.

8. A video signal recording and reproducing apparatus according to Claim 1 wherein said means for retarding the reproduced brightness signal or the reproduced chrominance signal applies said reproduced signal to a plurality of delay means having a predetermined delay time difference from each other, applies the outputs from said delay means to a switching circuit, said switching circuit being controlled by a signal generated by the discontinuity point detection signal, and sequentially selects the signals applied to said switching circuit.

9. A video signal recording and reproducing circuit according to Claim 1 wherein said means for retarding the reproduced brightness signal or the reproduced chrominance signal applies said reproduced signal to a variable delay means, the delay time of said variable delay means being controlled by a signal generated by the discontinuity point detection signal.

**Patentansprüche**

1. Videosignalaufzeichnungs- und Wiedergabegerät, bei dem ein PAL- oder SECAM-Farbfernsehsignal durch zwei unter einem gegenseitigen Azimutwinkel angeordnete Köpfe auf eine Beziehung von $t_H+\alpha_H \neq k$ aufweisenden Schrägspuren auf einem Aufzeichnungsmedium sequentiell aufgezeichnet und von diesen wiedergegeben wird, enthaltend

eine Einrichtung (20) zur Erfassung von Unstetigkeitspunkten eines wiedergegebenen Chrominanzsignals oder eines wiedergegebenen Horizontalsynchronsignals in einer Schnellvorlauf-, Langsamlauf-, Stehbild- oder Rückwärts-Wiedergabebetriebsart, in der die Signale mit einer von der Bewegungsgeschwindigkeit des Aufzeichnungsmediums im Aufzeichnungsbetrieb verschiedenen Bewegungsgeschwindigkeit wiedergegeben werden,

eine Einrichtung (14) zum Verzögern eines wiedergegebenen Helligkeitssignals um $[2(t_H+\alpha_H)-m]$ Zeilen und Verzögern eines wiedergegebenen Chrominanzsignals um $[2(t_H+\alpha_H)-2l]$ Zeilen in bezug auf das Signal vor dem Unstetigkeitspunkt bei jeder Erfassung des Unstetigkeitspunktes durch die Erfassungseinrichtung in der Schnellvorlauf-Betriebsart, und

eine Einrichtung (16, 17, 18) zur Vorverlegung des wiedergegebenen Helligkeitssignals um $[2(t_H+\alpha_H)-m]$ Zeilen und Vorverlegung des wiedergegebenen Chrominanzsignals um $[2(t_H+\alpha_H)-2l]$ Zeilen in bezug auf das Signal vor dem Unstetigkeitspunkt bei jeder Erfassung des Unstetigkeitspunktes durch die Erfassungseinrichtung in der Langsamlauf-, Stehbild oder Rückwärts-Wiedergabebetriebsart,

wobei

$\alpha_H$: die Versetzung in Zeilenperioden zwischen auf benachbarten Spuren ausgebildeten Horizontalsynchronsignalen ist, wenn die beiden Köpfe unter einem gegenseitigen Winkel von 180° angeordnet sind,

$t_H$: die Anzahl von Zeilen pro Spur ist, und

k, l, m: ganze Zahlen sind.

2. Videosignalaufzeichnungs- und Wiedergabegerät nach Anspruch 1, bei dem das PAL- oder SECAM-Farbfernsehsignal durch die beiden den gegenseitigen Azimutwinkel aufweisenden Köpfe auf den die Beziehung $\alpha_H=n$ (wobei n eine ganze Zahl ist) aufweisenden Schrägspuren auf dem Aufzeichnungsmedium mit einem Teilbildsignal pro Spur sequentiell aufgezeichnet und von diesen wiedergegeben wird, wobei das Gerät umfaßt:

eine Einrichtung (20) zur Erfassung der Unstetigkeitspunkte des wiedergegebenen Trägerchrominanzsignals in der Stehbild-, Langsamlauf-, Schnellvorlauf- oder Rückwärts-Wiedergabebetriebsart, in der die Signale mit einer von der Bewegungsgeschwinkigkeit der Aufzeichnungsmediums beim Aufzeichnungsbetrieb verschiedenen Bewegungsgeschwindigkeit wiedergegeben werden, und

eine Einrichtung (46) zur Verzögerung des wiedergegebenen Trägerchrominanzsignals um 1,0 Zeilen oder davon um geradzahlige Zeilen verschiedene bei jeder Erfassung des Unstetigkeitspunktes durch die Erfassungseinrichtung.

3. Videosignalaufzeichnungs- und Wiedergebegerät nach Anspruch 1, bei dem die Einrichtung (20) zum Erfassen der Unstetigkeitspunkte des wiedergegebenen Trägerchrominanzsignals oder des wiedergegebenen Horizontalsynchronsignals ein Signal erzeugt, welches den Unstetigkeitspunkt durch eines oder mehrere von Signalen anzeigt, die ein durch Erfassung einer Änderung in einer Hüllkurve des wiedergegebenen Signals erzeugtes Signal, ein Phasenvergleichsfehlersignal in einem APC-Schaltkreis (71) und ein durch eine Erfassung eines Unstetigkeitspunktes in dem Horizontalsynchronsignal des wiedergegebenen Helligkeitssignals erzeugtes Signal umfassen.

4. Videosignalaufzeichnungs- und Wiedergabegerät nach Anspruch 1, bei dem die Einrichtung (20) zum Erfassen der Unstetigkeitspunkte des wiedergegebenen Trägerchrominanzsignals oder des Horizontalsynchronsignals ein Signal erzeugt, das den Unstetigkeitspunkt durch ein Ausgangssignal aus einem einen Ausfallkompensator bildenden Signalverlustdetektor anzeigt.

5. Videosignalaufzeichnungs- und Wiedergabegerät nach Anspruch 1, bei dem das aufzuzeichnende und wiederzugebende Signal ein PAL-Farbfernsehsignal ist und die Einrichtung zum Erfassen der Unstetigkeitspunkte des wiedergegebenen Trägerchrominanzsignals oder des wiedergegebenen Horizontalsynchronsignals in einem Wiedergabeträgerchrominanzsignal-Verarbeitungsschaltkreis ein APC-Fehlersignal erzeugt sowie ein Horizontalausgangssignal in Synchronismus mit dem Horizontalsynchromsignal, wobei das APC-Fehlersignal durch ein mit dem Horizontalausgangssignal in Beziehung stehendes Torsignal getort wird, so daß für jede horizontale Abtastperiode ein APC-Signal erzeugt wird, welches integriert und gehalten wird.

6. Videosignalaufzeichnungs- und Weidergabegerät nach Anspruch 1, bei dem das aufzuzeichnende und weiderzugebende Signal ein PAL-Farbfernsehsignal ist und die Einrichtung zum Erfassen der Unstetigkeitspunkte des wiedergegebenen Trägerchrominanzsignals oder des wiedergegebenen Horizontalsynchronsignals in einem Wiedergabeträgerchrominanzsignal-Verarbeitungsschaltkreis ein APC-Signal erzeugt sowie ein Horizontalausgangssignal in Synchronismus mit dem Horizontalsynchronsignal, und ein mit dem Horizontalausgangssignal in Beziehung stehendes Datensignal erzeugt wird, das entweder bei positiver oder negativer Polarität des APC-Fehlersignals gelesen wird, so daß ein einem Pegel des gelesenen Datensignals entsprechendes Signal erzeugt wird, das solange festgehalten wird, bis das Datensignal erneut gelesen wird.

7. Videosignalaufzeichnungs- und Wiedergabegerät nach Anspruch 1, bei dem die Einrichtung zum Verzögern des wiedergegebenen Trägerchrominanzsignals oder des Horizontalsynchronsignals das durch die Einrichtung zum Erfassen der Unstetigkeitspunkte des wiedergegebenen Trägerchrominanzsignals oder des Horizontalsynchronsignals erzeugte Signal integriert, das integrierte Signal an eine Sperrschaltung anlegt und das Ausgangssignal der Sperrschaltung an einen Flip-Flop anlegt, um ein Signal zu erzeugen, dessen Polarität bei jeder Erzeugung des Erfassungssignals umgekehrt wird.

8.. Videosignalaufzeichnungs- und Wiedergabegerät nach Anspruch 1, bei dem die Einrichtung zum Verzögern des wiedergegebenen Helligkeitssignals oder des weidergegebenen Chrominanzsignals das wiedergegebene Signal an eine Mehrzahl von einen vorbestimmten gegenseitigen Verzögerungszeitunterschied aufweisenden Verzögerungseinrichtungen anlegt, die Ausgangssignale der Verzögerungseinrichtungen an einen durch ein von dem Unstetigkeitspunkt-Erfassungssignal erzeugten Signal gesteuerten schaltenden Schaltkreis anlegt und sequentiell die an den schaltenden Schaltkreis angelegten Signale anwählt.

9. Videosignalaufzeichnungs- und Wiedergabeschaltkreis nach Anspruch 1, bei dem die Einrichtung zum Verzögern des wiedergegebenen Helligkeitssignals oder des wiedergegebenen Chrominanzsignals das wiedergegebene Signal an eine veränderbare Verzögerungseinrichtung anlegt, deren Verzögerungszeit durch ein von dem Unstetigkeitspunkt-Erfassungssignal erzeugtes Signal gesteuert ist.

**Revendications**

1. Appareil d'enregistrement et de reproduction de signal vidéo, dans lequel un signal de télévision en couleurs du système PAL ou SECAM est enregistré et reproduit en séquence sur et à partir de pistes obliques sur un support d'enregistrement, ayant un rapport $t_H+\alpha_H \neq k$, par deux têtes présentant un angle d'azimut entre elles, caractérisé en ce qu'il comprend des moyens (20) pour détecter les points de discontinuité d'un signal de chrominance reproduit ou d'un signal de synchronisation horizontale reproduit, dans le mode de reproduction en avance rapide, au ralenti, par images fixes ou en marche arrière, lorsque les signaux sont reproduite à une vitesse de déplacement du support d'enregistrement qui est différente de la vitesse de déplacement de ce support lors de l'opération d'enregistrement; des moyens (14) pour retarder le signal du luminance reproduit de $[2(t_H+\alpha_H)-m]$ lignes et pour retarder le signal de chrominance reproduit de $[2(t_H+\alpha_H)-2l]$ lignes par rapport au signal avant le point de discontinuité, chaque fois que le point de discontinuité est détecté par les moyens de détection dans le mode de reproduction en avance rapide; et des moyens (16, 17, 18) pour avancer le signal de luminance reproduit de $[2(t_H+\alpha_H)-m]$ lignes et pour avancer le signal de chrominance reproduit de $[2(t_H+\alpha_H)-2l]$ lignes par rapport au signal avant le point de discontinuité, chaque fois que le point de discontinuité est détecté par les moyens de détection dans le mode de reproduction au ralenti, par images fixes ou en marche arrière; $\alpha_H$ étant le décalage en périodes de temps entre des signaux de synchronisation horizontale formée sur des pistes contiguës lorsque les deux têtes sont disposées suivant un angle de 180° l'une par rapport à l'autre, $t_H$ étant le nombre de lignes par piste et k, l, m étant des nombres entiers.

2. Appareil d'enregistrement et de reproduction de signal vidéo selon la revendication 1, dans lequel le signal de télévition en couleurs du système PAL ou SECAM est enregistré et reproduit en séquence, à raison d'une trame de signal par piste, sur et à partir des pistes obliques sur le support d'enregistrement, ayant le rapport $\alpha_H=n$ (n étant un nombre entier), par les deux têtes présentant un angle d'azimut entre elles, caractérisé en ce qu'il comprend des moyens (20) pour détecter les points de discontinuité du signal de chrominance reproduit dans le mode de reproduction par images fixes, au ralenti, en avance rapide ou en marche arrière, lorsque les signaux sont reproduits à une vitesse de déplacement du support d'enregistrement qui est différente de la vitesse de déplacement de ce support lors de l'opération d'enregistrement; et des moyens (46) pour retarder le signal de chrominance reproduit de 1,0 ligne ou d'un nombre de lignes qui diffère de celui-ci d'un nombre pair de lignes, chaque fois que le point de discontinuité est détecté par les moyens de détection.

3. Appareil d'enregistrement et de reproduction de signal vidéo selon la revendication 1, caractérisé en ce que les moyens (20) prévus pour détecter les points de discontinuité du signal de chrominance reproduit ou du signal de synchronisation horizontale reproduit, produisent un signal indiquant le point de discontinuité à partir de l'un ou de plusieurs parmi un signal produit par le détection d'un changement dans l'enveloppe du signal reproduit, un signal d'erreur de comparaison de phase dans un circuit de contrôle automatique de phase (71) et un signal produit par la détection d'un point de discontinuité dans le signal de synchronisation horizontale dans le signal de luminance reproduit.

4. Appareil d'enregistrement et de reproduction de signal vidéo selon la revendication 1, caractérisé en ce que les moyens (20) prévus pour détecter les points de discontinuité du signal de chrominance reproduit ou du signal de synchronisation horizontale reproduit, produisent un signal indiquant le point de discontinuité à partir d'un signal de sortie d'un détecteur de perte de signal constituant un compensateur de dropout.

5. Appareil d'enregistrement et de reproduction de signal vidéo selon la revendication 1, dans lequel le signal à enregistrer et à reproduire est le signal de télévision en couleurs du système PAL, caractérisé en ce que les moyens prévus pour détecter les points de discontinuité du signal de chrominance reproduit ou du signal de synchronisation horizontale reproduit produisent un signal d'erreur de contrôle automatique de phase dans un circuit de traitement du signal de chrominance reproduit et un signal de sortie horizontal en synchronisme avec le signal de synchronisation horizontale, le signal d'erreur de contrôle automatique de phase étant transmis par une porte sous la commande d'un signal de porte en rapport avec le signal de sortie horizontal, de telle manière qu'un signal de contrôle automatique de phase soit produit pour chaque période de balayage horizontal, ce signal de contrôle automatique de phase étant intégré et maintenu.

6. Appareil d'enregistrement et de reproduction de signal vidée selon la revendication 1, dans lequel le signal à enregistrer et à reproduire est le signal de télévision en couleurs du système PAL, caractérisé en ce que les moyens prévus pour détecter les points de discontinuité du signal de chrominance reproduit ou du signal de synchronisation horizontale reproduit produisent un signal de contrôle automatique de phase dans un circuit de traitement du signal de chrominance reproduit et un signal de sortie horizontal en synchronisme avec le signal de synchronisation horizontale, et en ce qu'un signal de données en rapport avec le signal de sortie horizontal est produit, ce signal de données étant lu par la polarité positive ou par la polarité négative du signal d'erreur de contrôle automatique de phase, de telle manière qu'un signal correspondant à un niveau du signal de données lu soit produit, ce signal étant conservé jusqu'à la lecture suivante du signal de données.

7. Appareil d'enregistrement et de reproduction de signal vidéo selon la revendication 1, caractérisé en ce que les moyens prévus pour retarder le signal de chrominance reproduit ou le signal de synchronisation horizontale intègrent le signal produit par les moyens prévus pour détecter les points de discontinuité du signal de chrominance reproduit ou du signal de synchronisation horizontale, appliquent le signal intégré à un circuit d'inhibition et appliquent le signal de sortie du circuit d'inhibition à une bascule bistable pour produire un signal dont la polarité est inversée chaque fois que le signal de détection est produit.

8. Appareil d'enregistrement et de reproduction de signal vidéo selon la revendication 1, caractérisé en ce que les moyens prévus pour retarder le signal de luminance reproduit ou le signal de chrominance reproduit appliquent ce signal reproduit à plusieurs éléments retardateurs ayant entre eux une différence prédéterlinée de temps de retardement, appliquent les signaux de sortie de ces éléments retardateurs à un circuit de commutation, ce circuit de commutation étant commandé par un signal produit par le signal de détection de point de discontinuité, et sélectent successivement les signaux appliqués au circuit de commutation.

9. Appareil d'enregistrement et de reproduction de signal vidéo selon la revendication 1, caractérisé en ce que les moyens prévue pour retarder le signal de luminance reproduit ou le signal de chrominance reproduit appliquent ce signal reproduit à des moyens à retard variable, le temps de retardement de ces moyens à retard variable étant commandé par un signal produit par le signal de détection de point de discontinuité.

FIG. 1

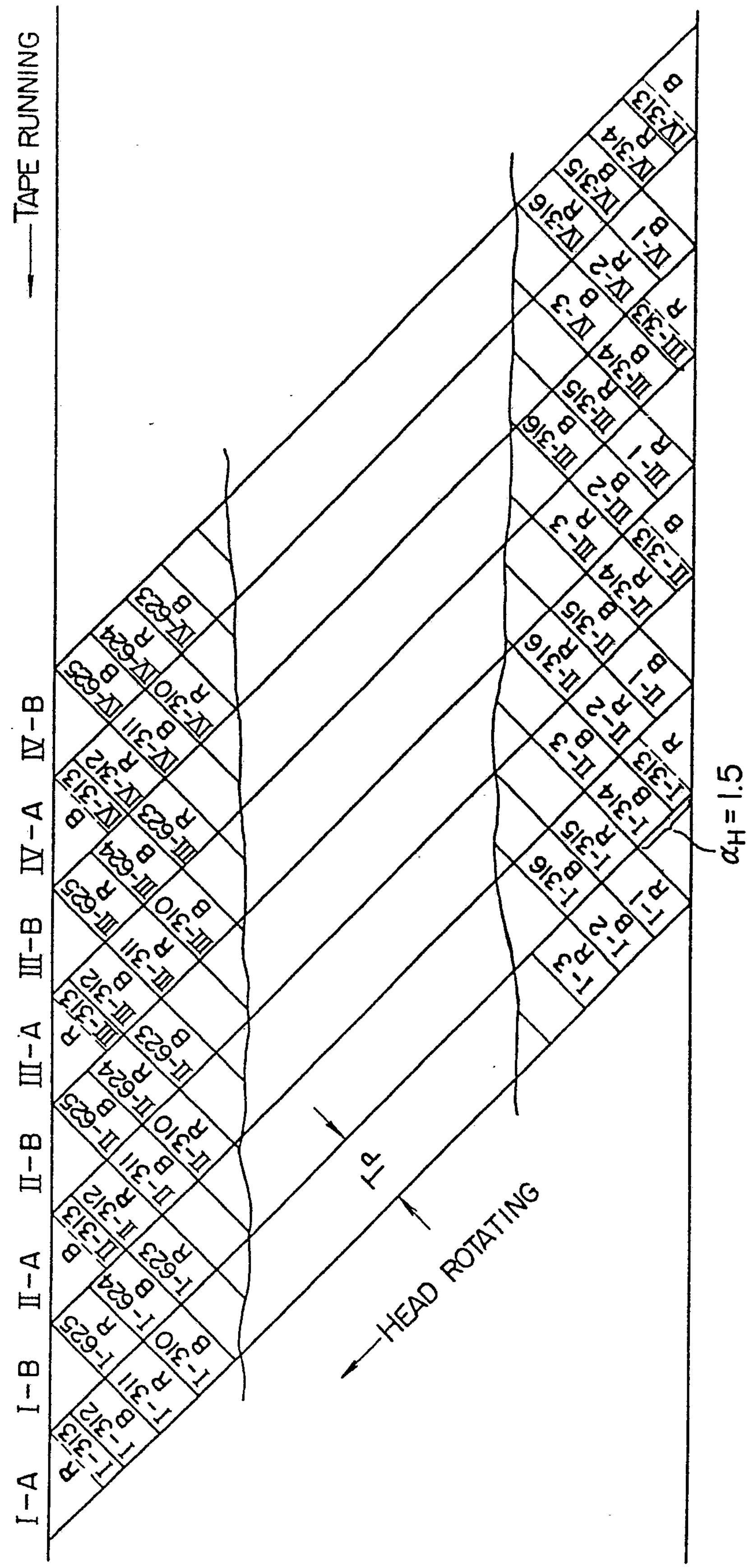
TAPE RUNNING
HEAD ROTATING
I-A
I-B
II-A
II-B
III-A
III-B
IV-A
IV-B
$\alpha_H = 1.5$

FIG. 2 (STILL)

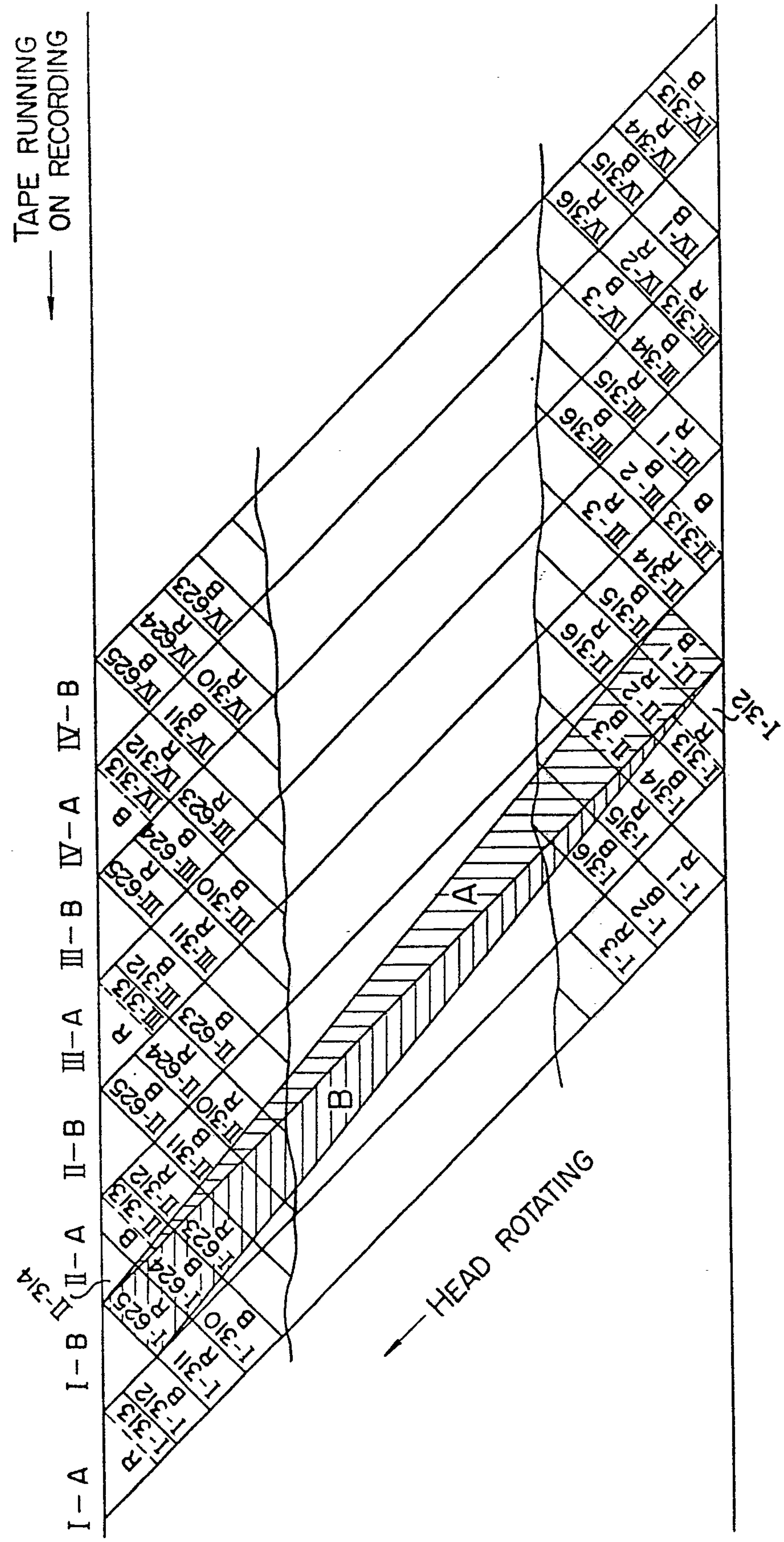
TAPE RUNNING
ON RECORDING
HEAD ROTATING
I−A
I−B
II−A
II−B
III−A
III−B
IV−A
IV−B
A
B

FIG. 3 (FAST FORWARD REPRODUCING)

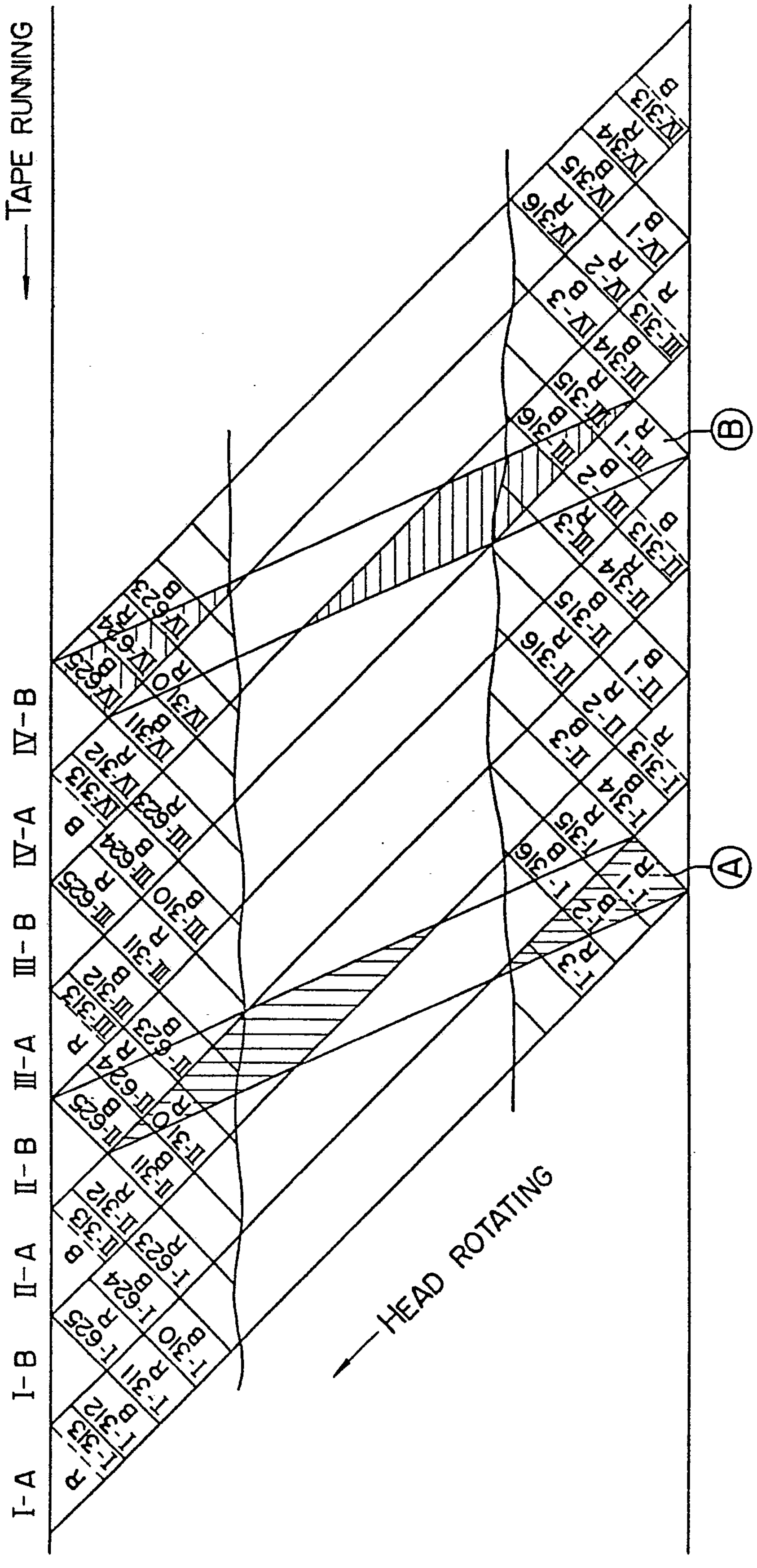

FIG. 4 (REVERSE REPRODUCING)

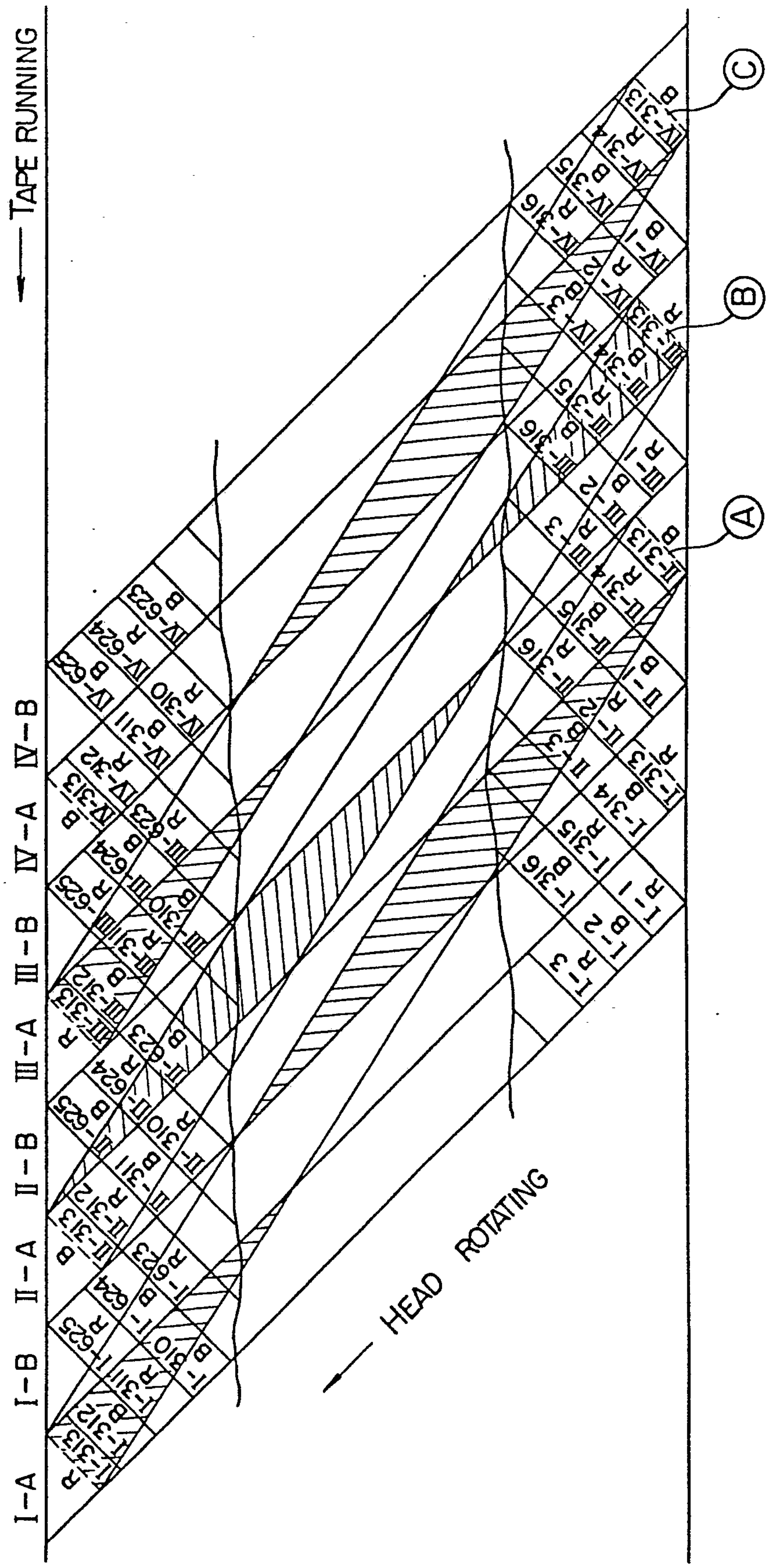

FIG. 5

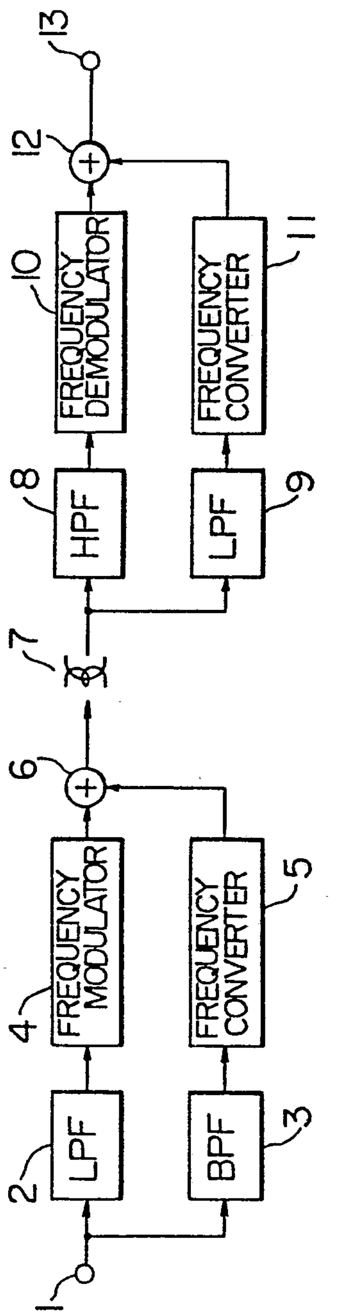

1
LPF
2
BPF
3
FREQUENCY MODULATOR
4
FREQUENCY CONVERTER
5
6
7
HPF
8
LPF
9
FREQUENCY DEMODULATOR
10
FREQUENCY CONVERTER
11
12
13

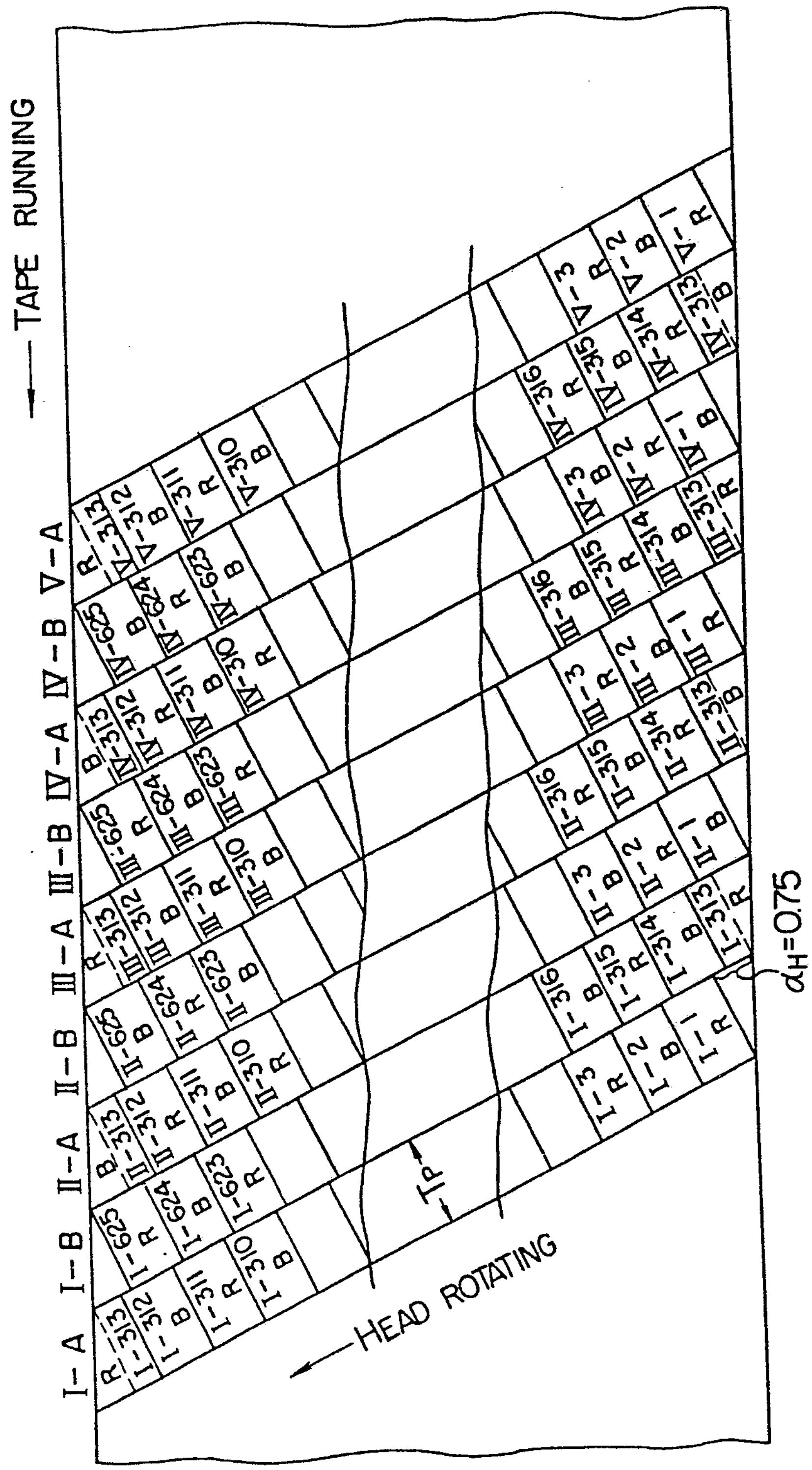
TAPE RUNNING
HEAD ROTATING
Tp
αH=0.75
I-A I-B II-A II-B III-A III-B IV-A IV-B V-A

FIG. 6

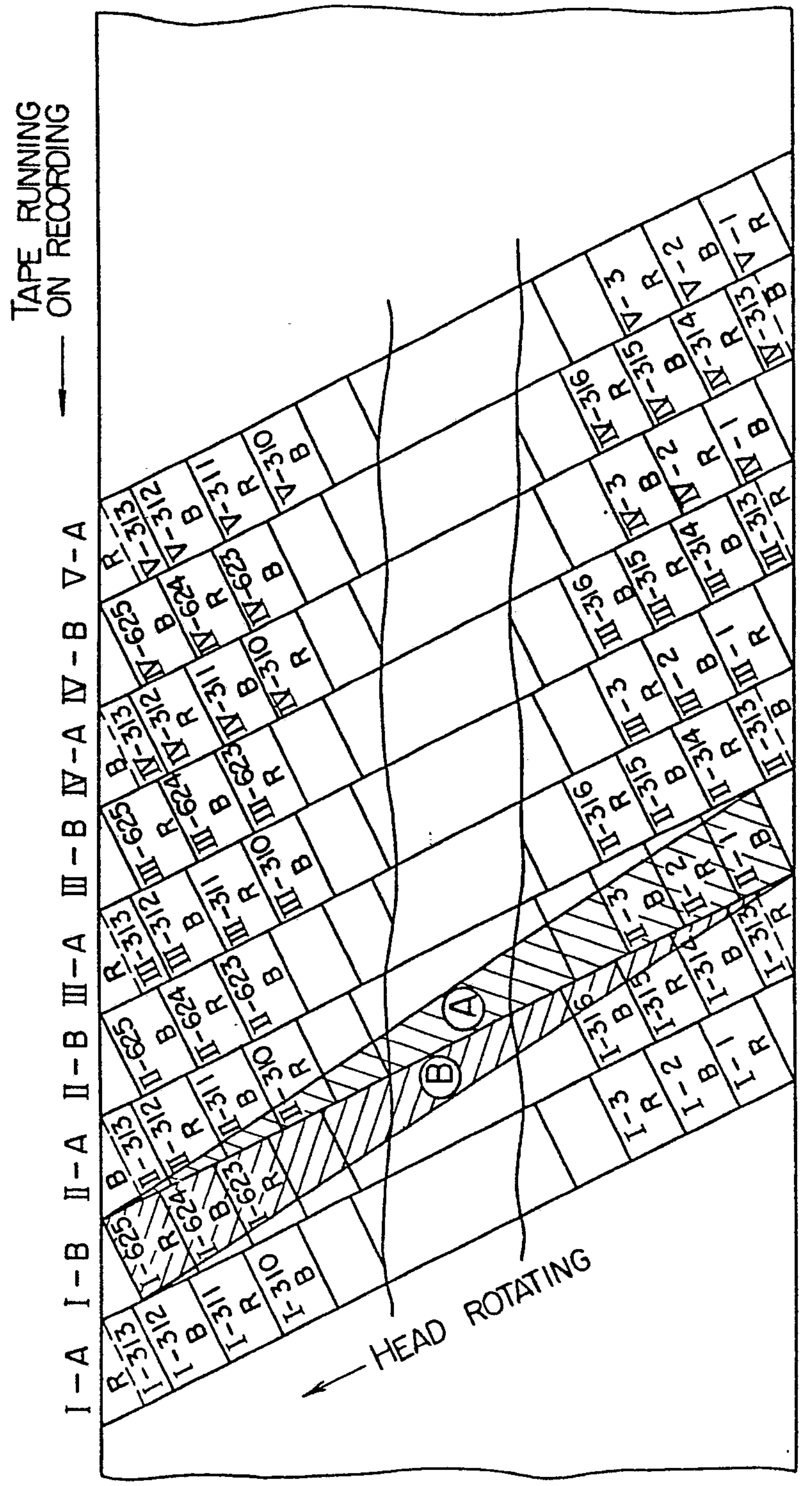
TAPE RUNNING ON RECORDING
I-A I-B II-A II-B III-A III-B IV-A IV-B V-A
HEAD ROTATING
A
B

FIG. 7 (STILL)

FIG. 8 (FAST FORWARD REPRODUCING)

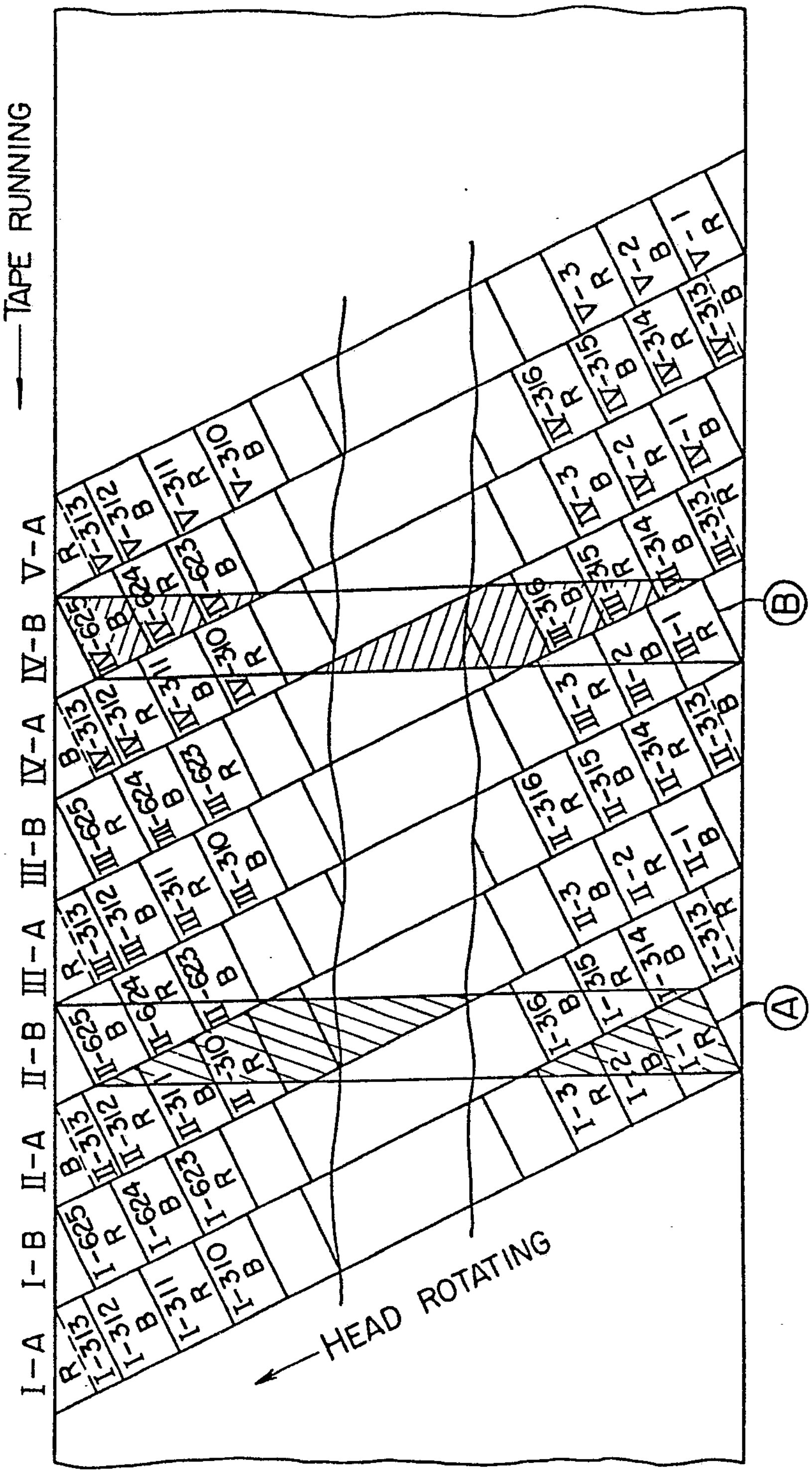

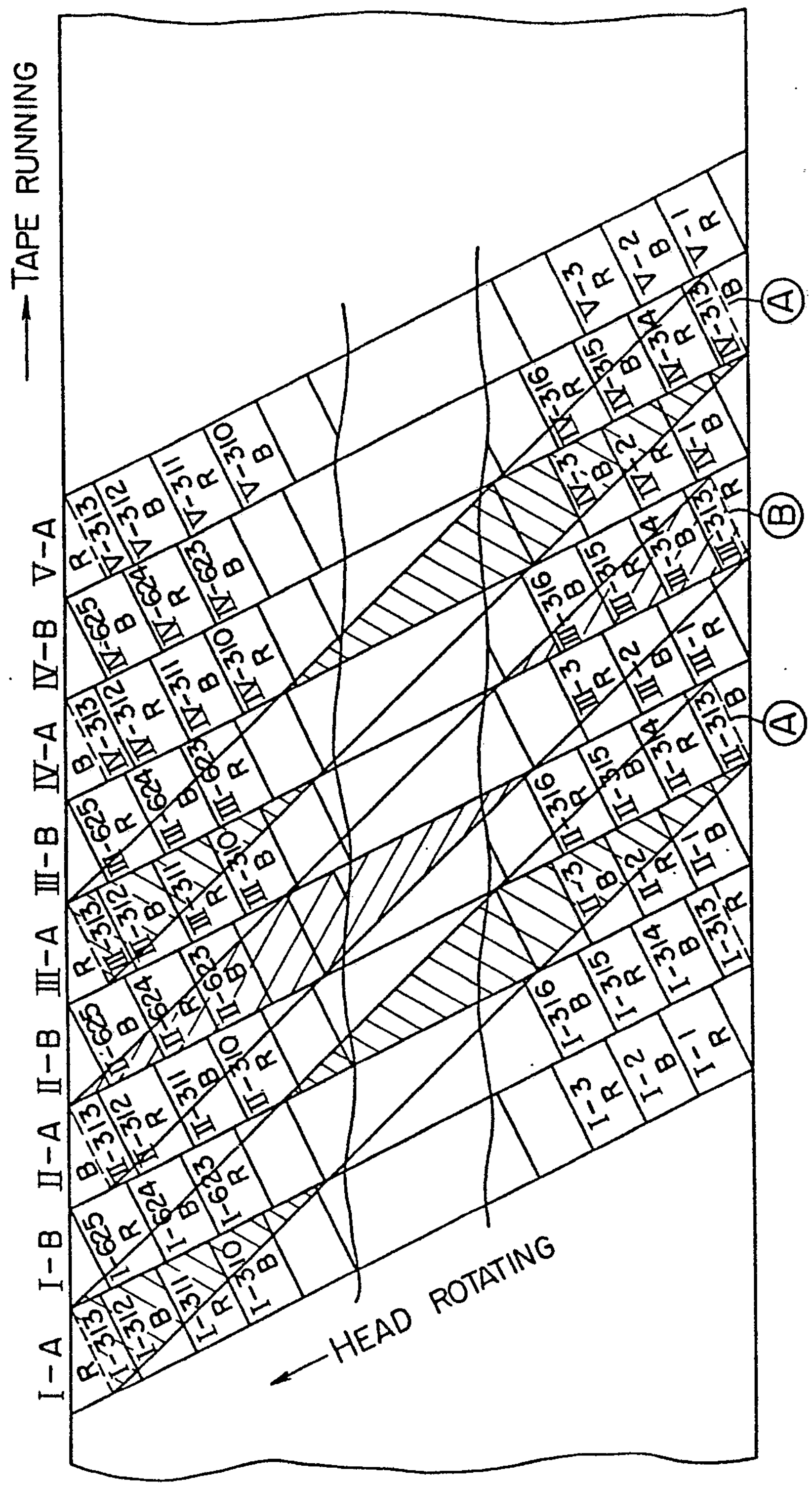


FIG. 9 (REVERSE REPRODUCING)

FIG. 10 (STILL)

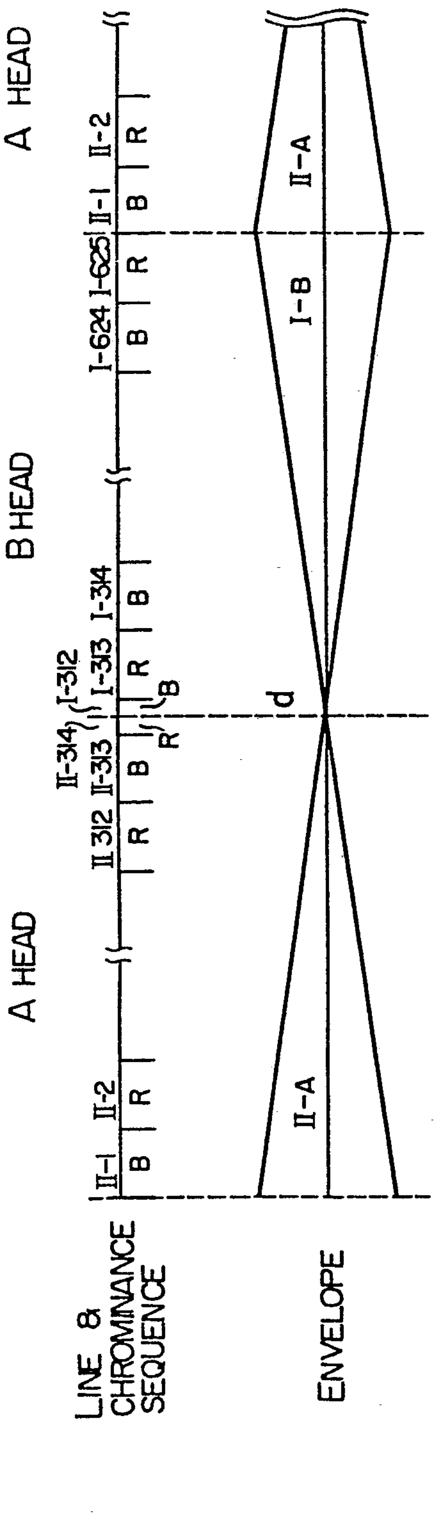


FIG. 11 (FAST FORWARD REPRODUCING)

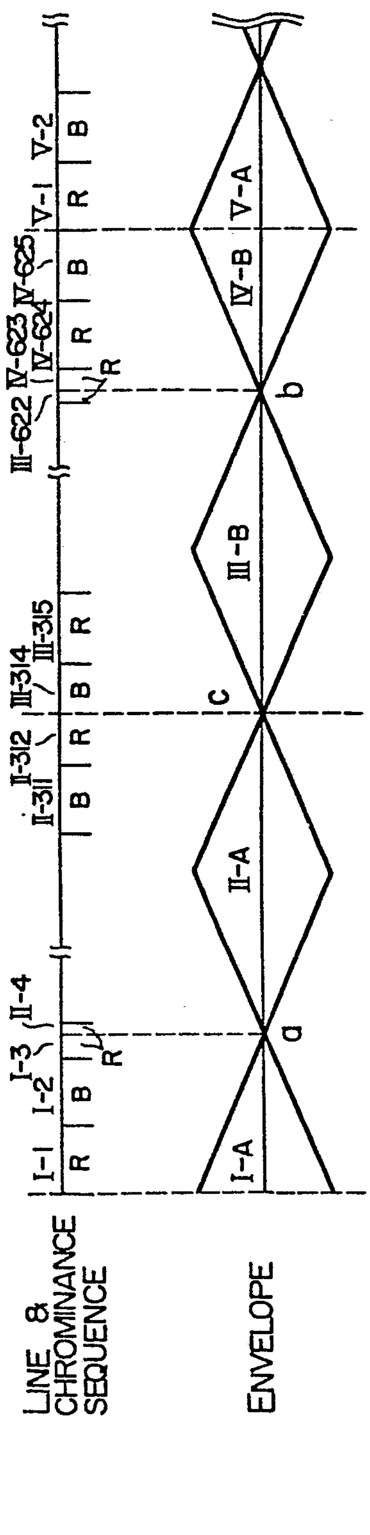

FIG. 12 (REVERSE REPRODUCING)

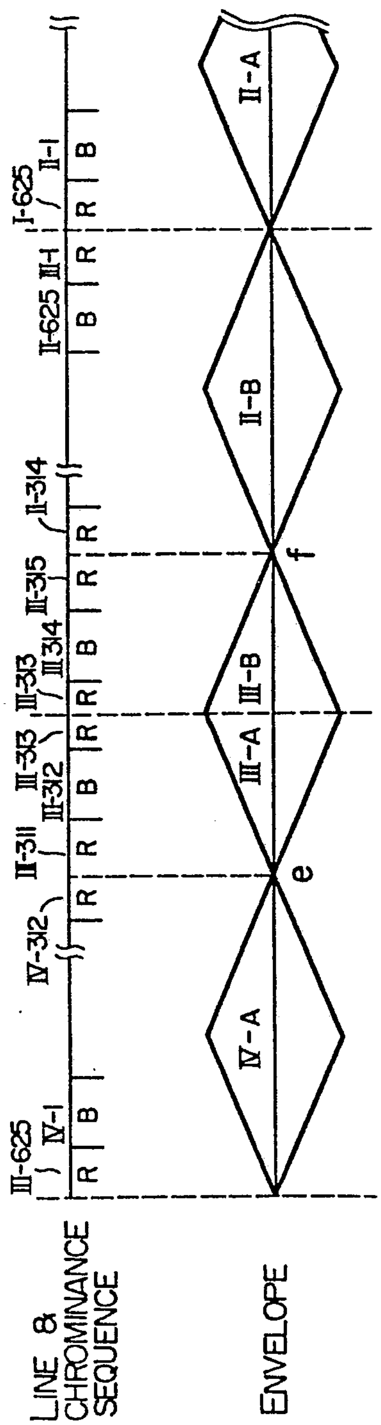

FIG. 13

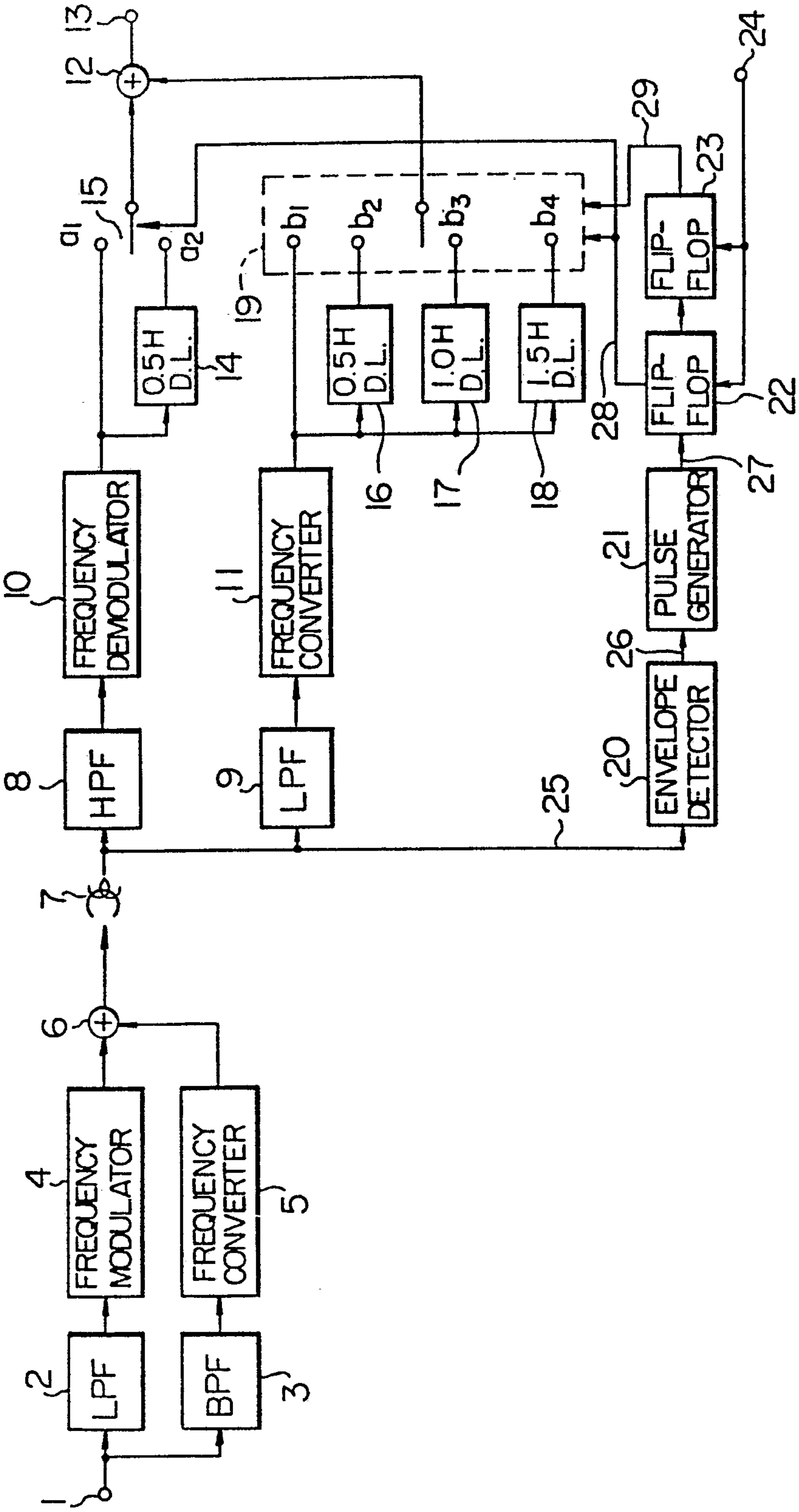
LPF
BPF
FREQUENCY MODULATOR
FREQUENCY CONVERTER
HPF
LPF
FREQUENCY DEMODULATOR
FREQUENCY CONVERTER
0.5H D.L.
0.5H D.L.
1.0H D.L.
1.5H D.L.
ENVELOPE DETECTOR
PULSE GENERATOR
FLIP-FLOP
FLIP-FLOP
a1
a2
b1
b2
b3
b4

FIG. 14

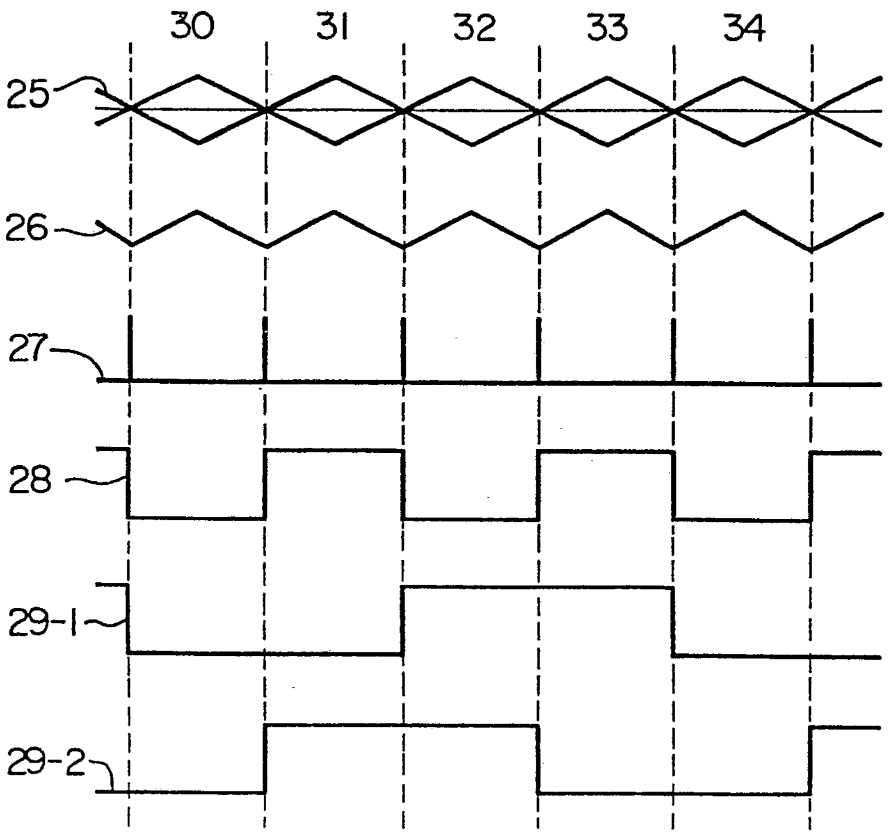

FIG. 15

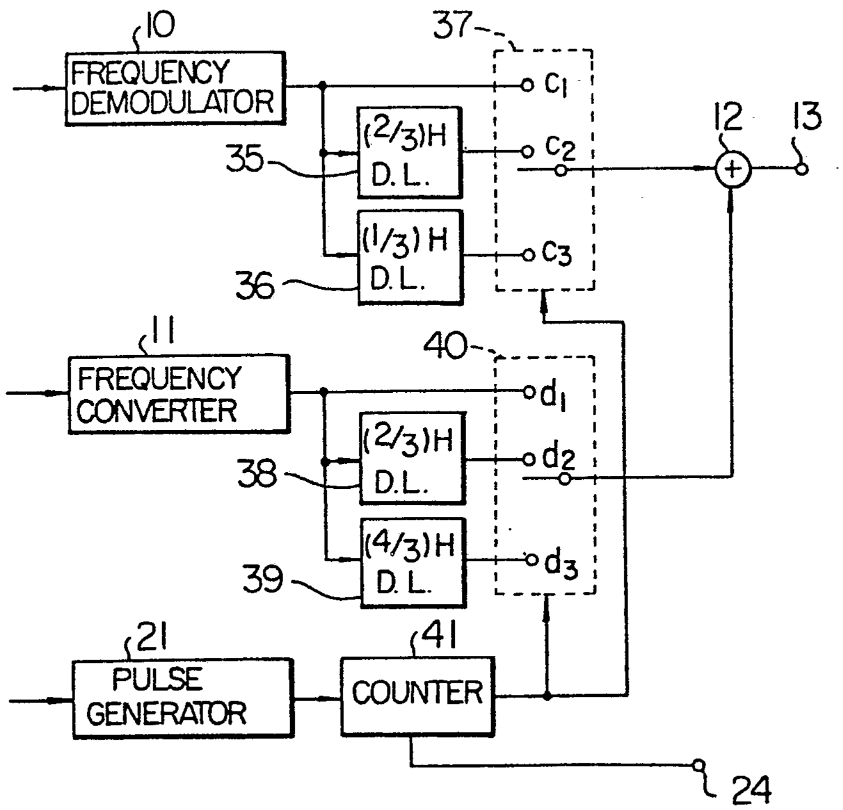

10
FREQUENCY DEMODULATOR
37
$c_1$
(2/3)H D.L.
$c_2$
35
(1/3) H D.L.
$c_3$
36
12
13
11
FREQUENCY CONVERTER
40
$d_1$
(2/3)H D.L.
$d_2$
38
(4/3)H D.L.
$d_3$
39
21
PULSE GENERATOR
41
COUNTER
24


FIG. 16

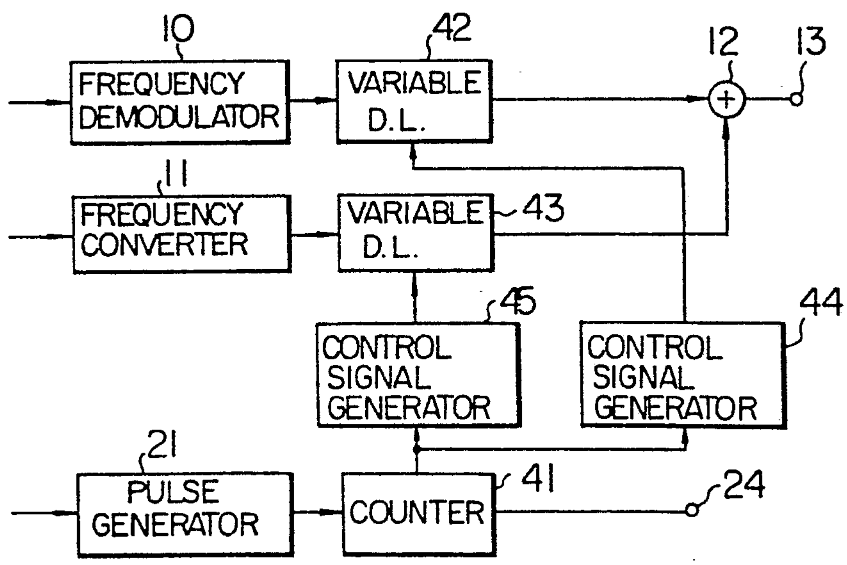

10
FREQUENCY DEMODULATOR
42
VARIABLE D.L.
12
13
11
FREQUENCY CONVERTER
VARIABLE D.L.
43
45
CONTROL SIGNAL GENERATOR
CONTROL SIGNAL GENERATOR
44
21
PULSE GENERATOR
COUNTER
41
24

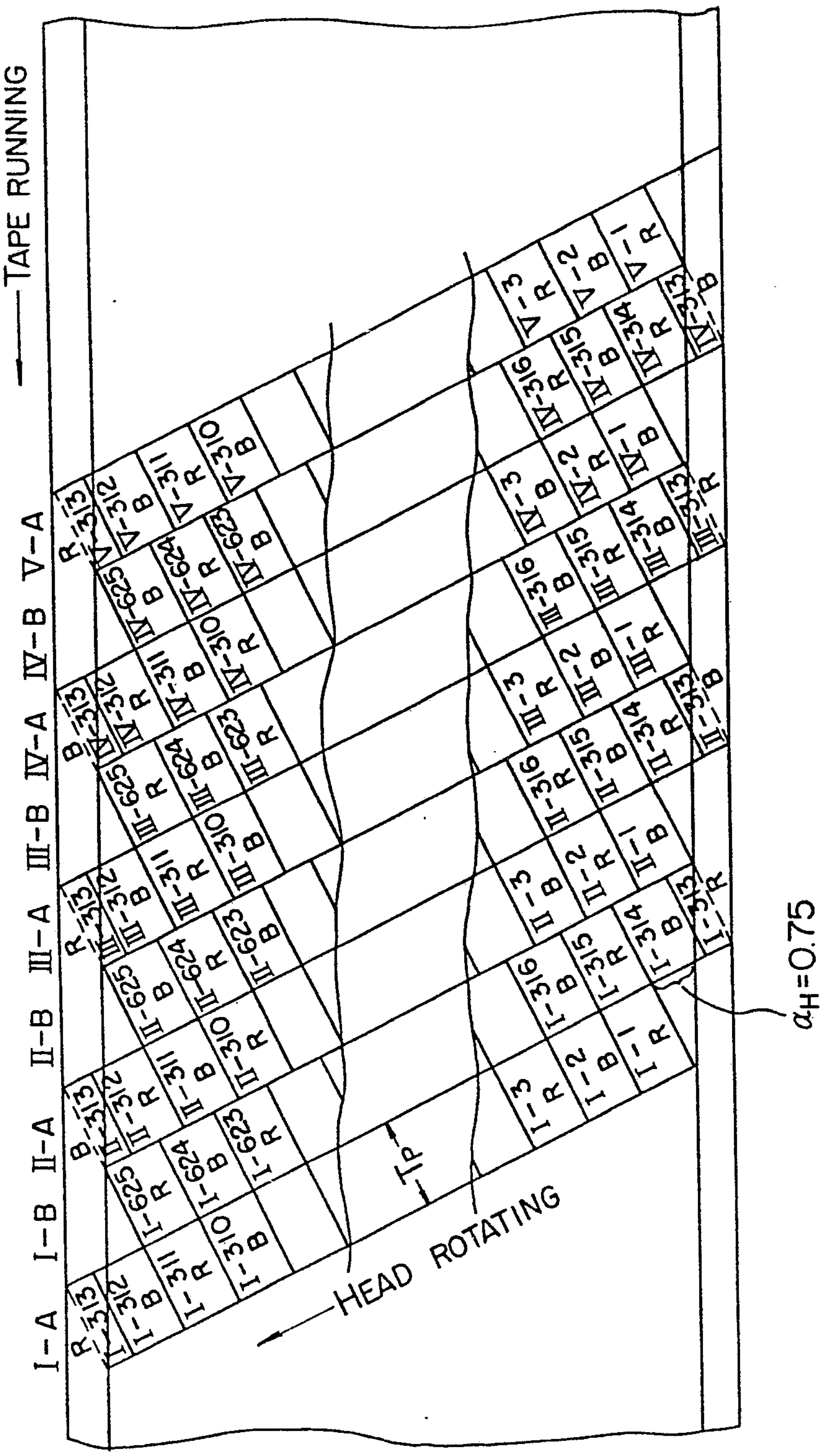
TAPE RUNNING
HEAD ROTATING
Tp
I-A I-B II-A II-B III-A III-B IV-A IV-B V-A
$a_H$=0.75

FIG. 17

FIG. 18

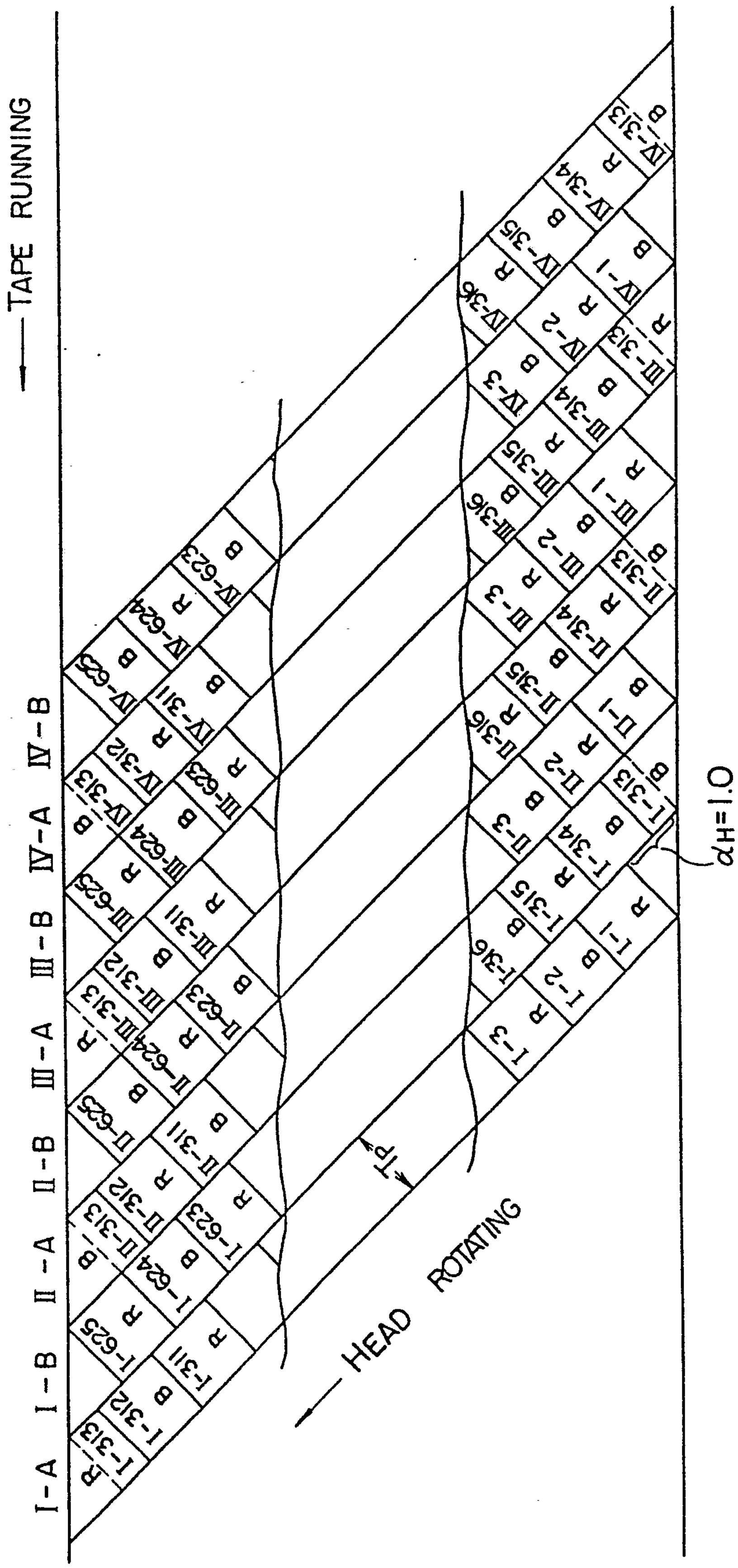
TAPE RUNNING
HEAD ROTATING
I-A I-B II-A II-B III-A III-B IV-A IV-B
Tp
αH=1.0

FIG. 19 (STLL)

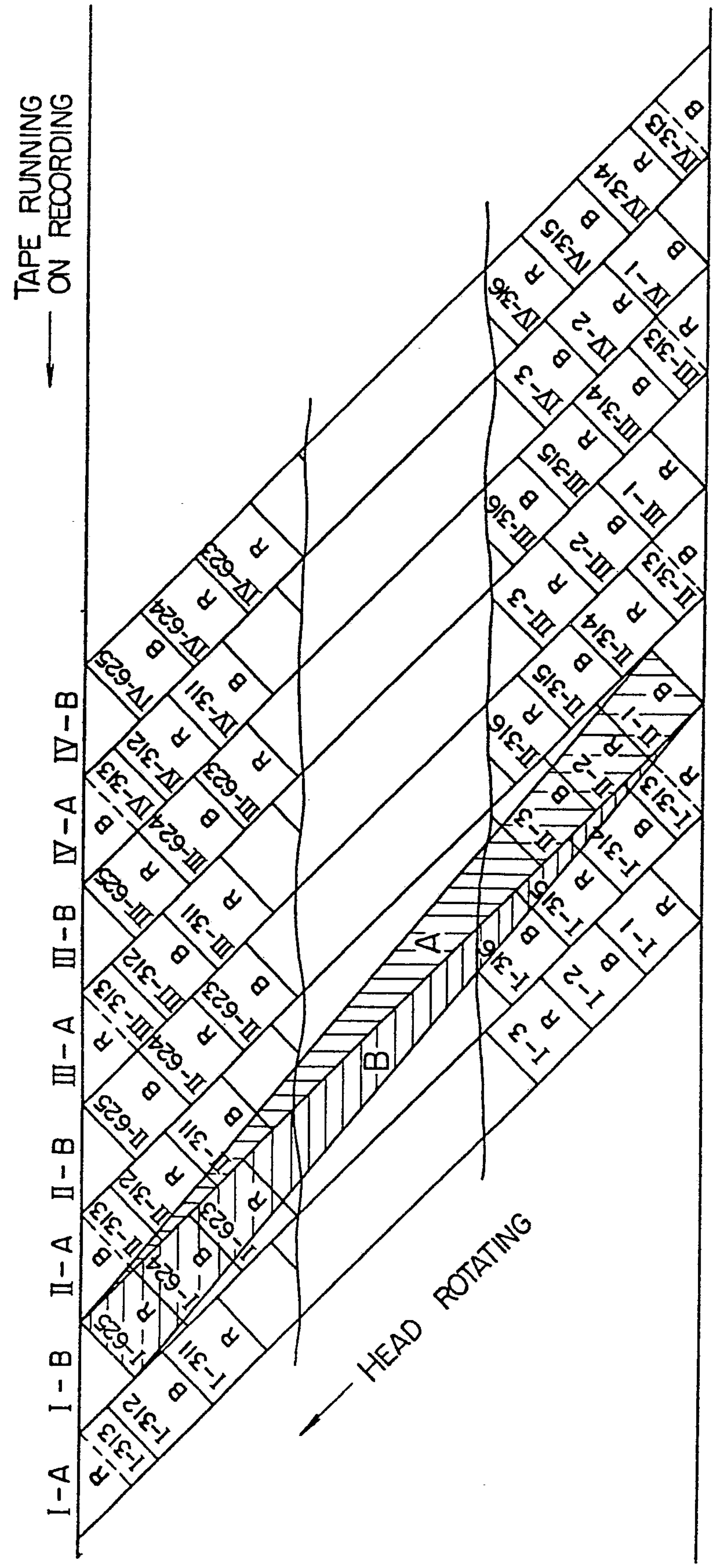
TAPE RUNNING ON RECORDING
HEAD ROTATING
I-A
I-B
II-A
II-B
III-A
III-B
IV-A
IV-B
A
B

FIG. 20 (FAST FORWARD REPRODUCING)

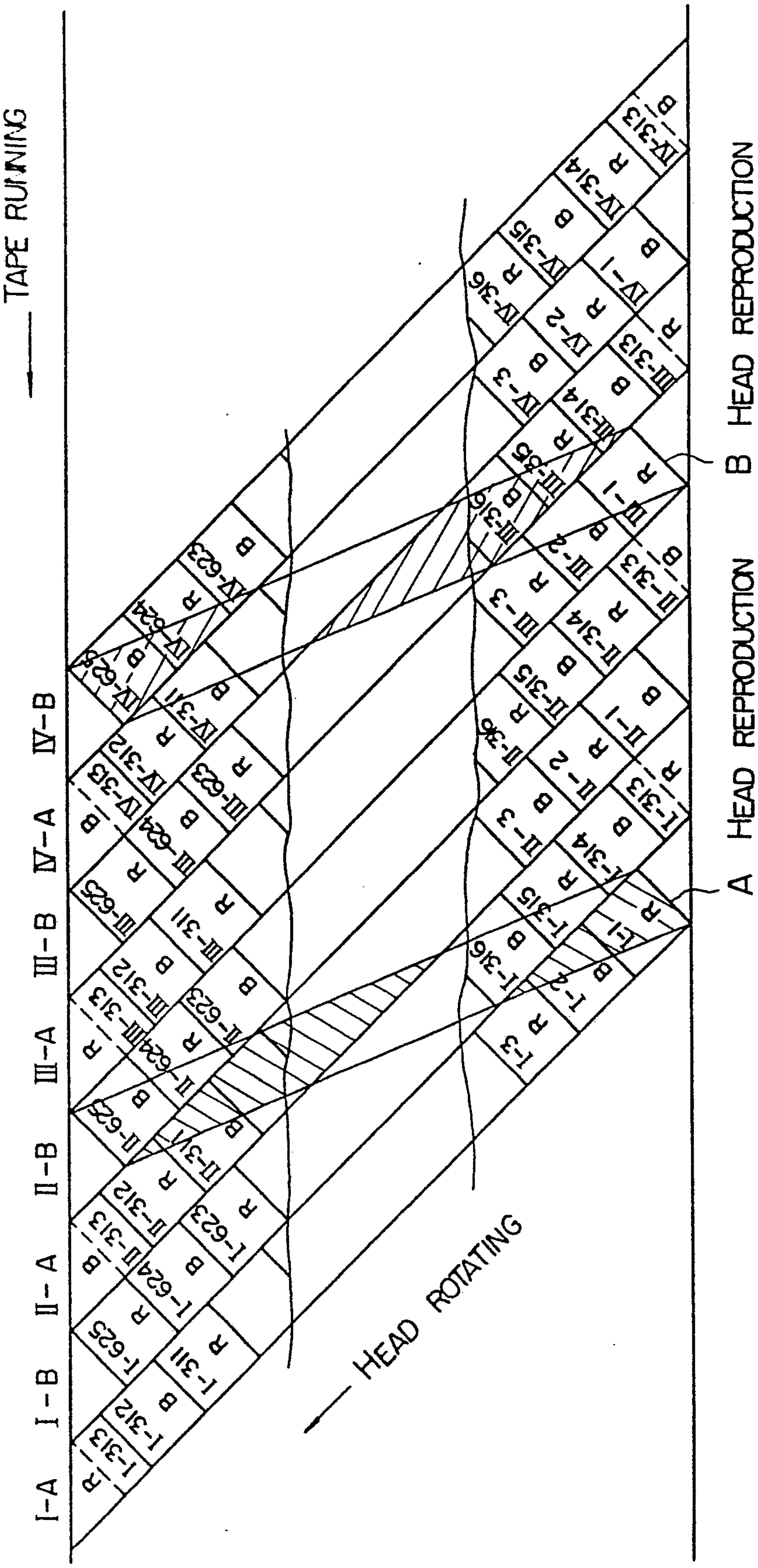

FIG. 21 (REVERSE REPRODUCING)

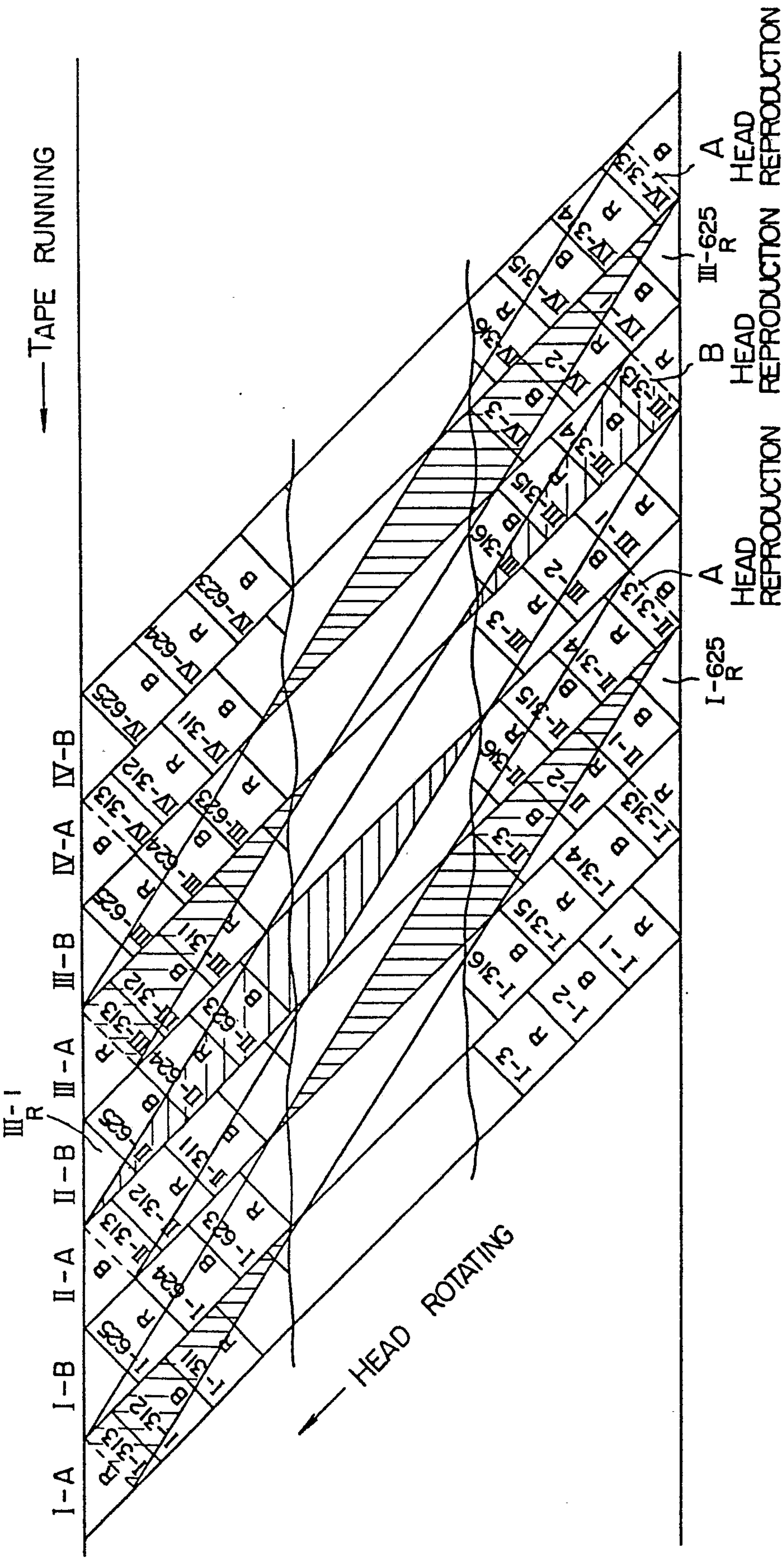

FIG. 22 (STILL)

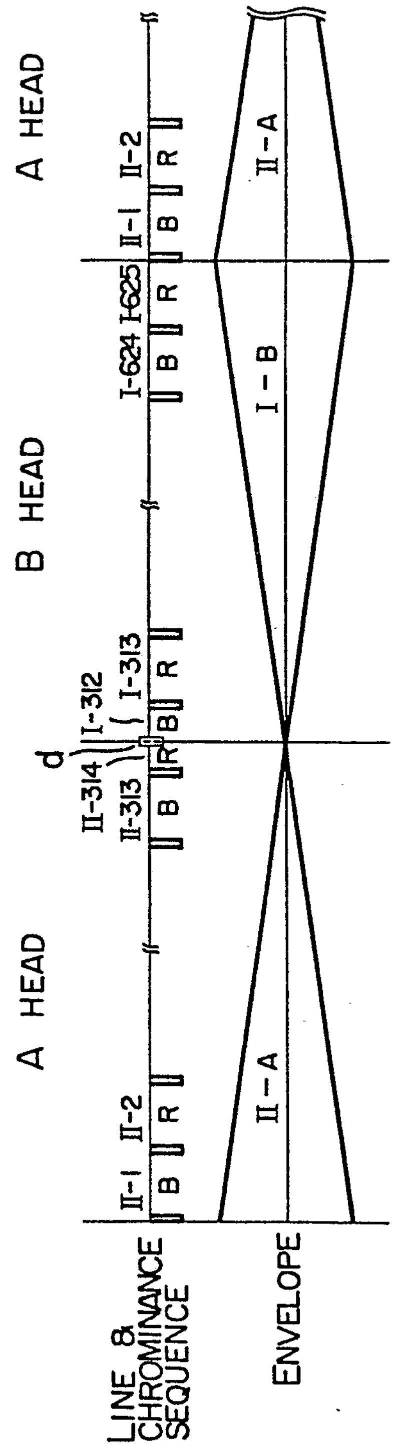
A HEAD
B HEAD
A HEAD
LINE & CHROMINANCE SEQUENCE
ENVELOPE
II-1
II-2
B
R
II-313
II-314
d
I-312
I-313
I-624
I-625
II-A
I-B

F I G. 23

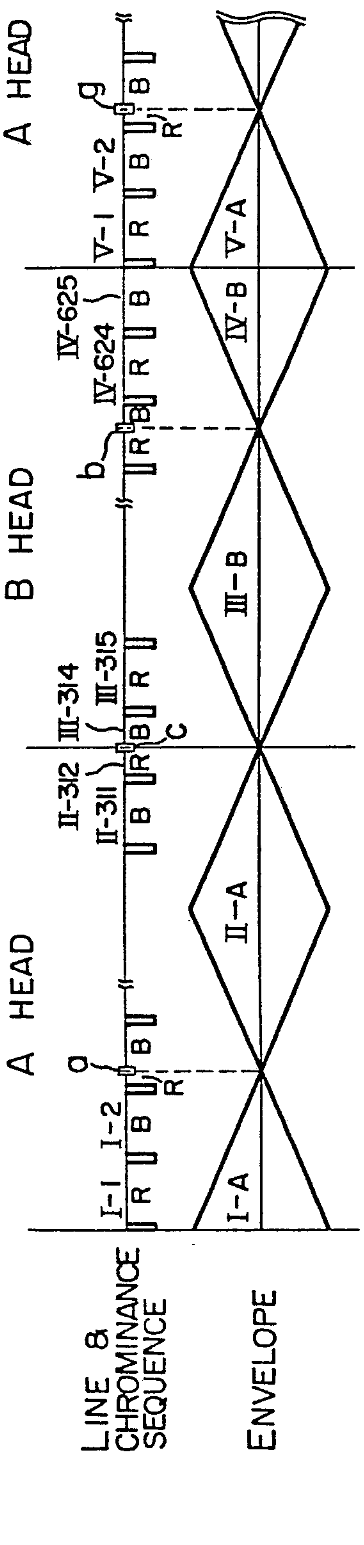


F I G. 24 (FAST FORWARD REPRODUCING)

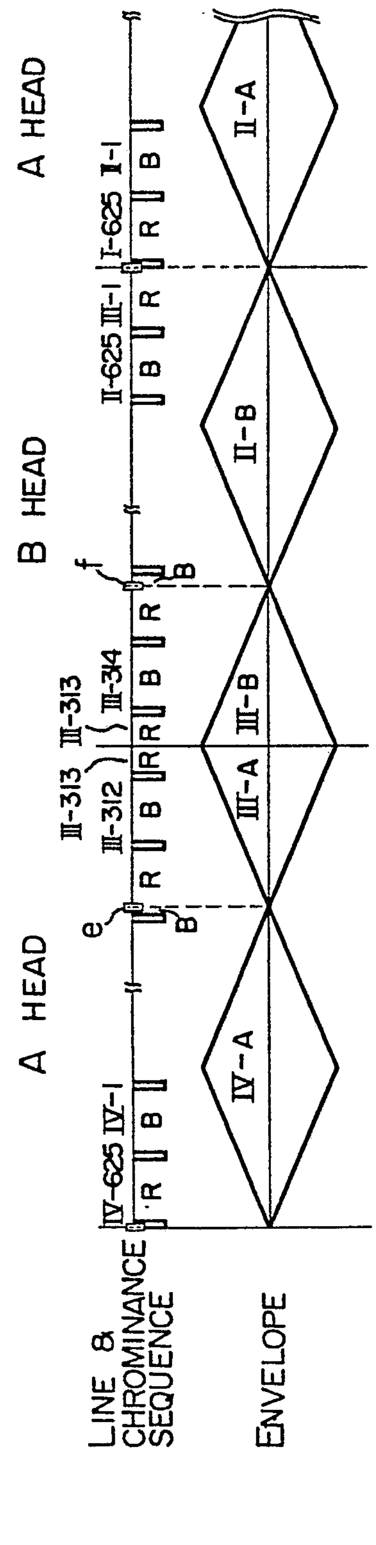

FIG. 25

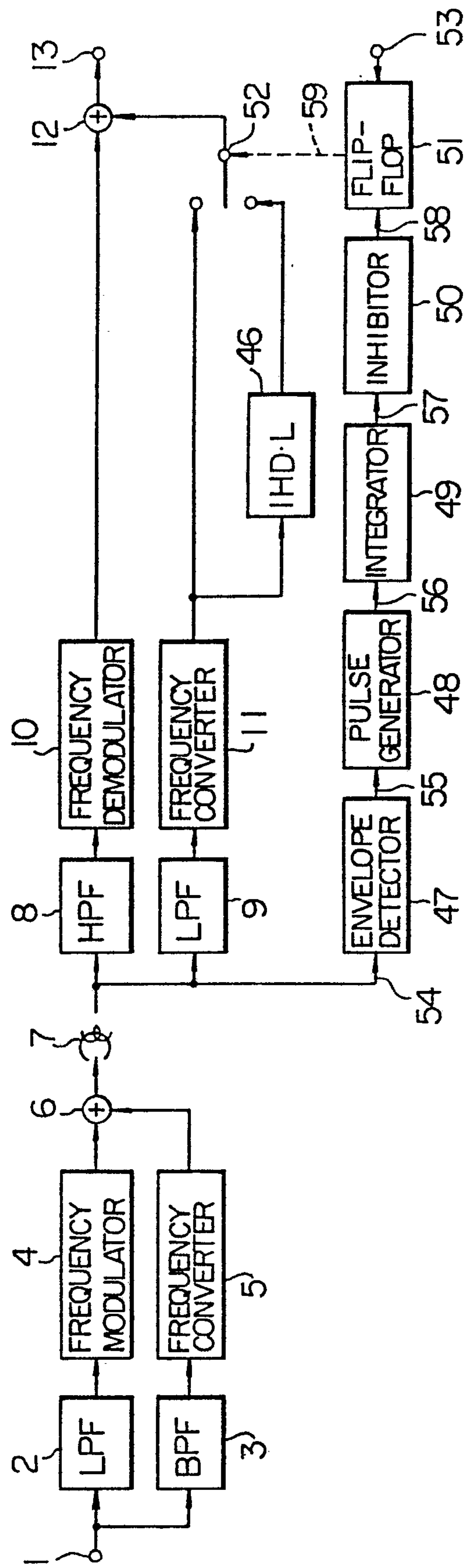
1
2
LPF
3
BPF
4
FREQUENCY MODULATOR
5
FREQUENCY CONVERTER
6
7
8
HPF
9
LPF
10
FREQUENCY DEMODULATOR
11
FREQUENCY CONVERTER
12
13
46
IHD·L
47
ENVELOPE DETECTOR
48
PULSE GENERATOR
49
INTEGRATOR
50
INHIBITOR
51
FLIP-FLOP
52
53
54
55
56
57
58
59

FIG. 26

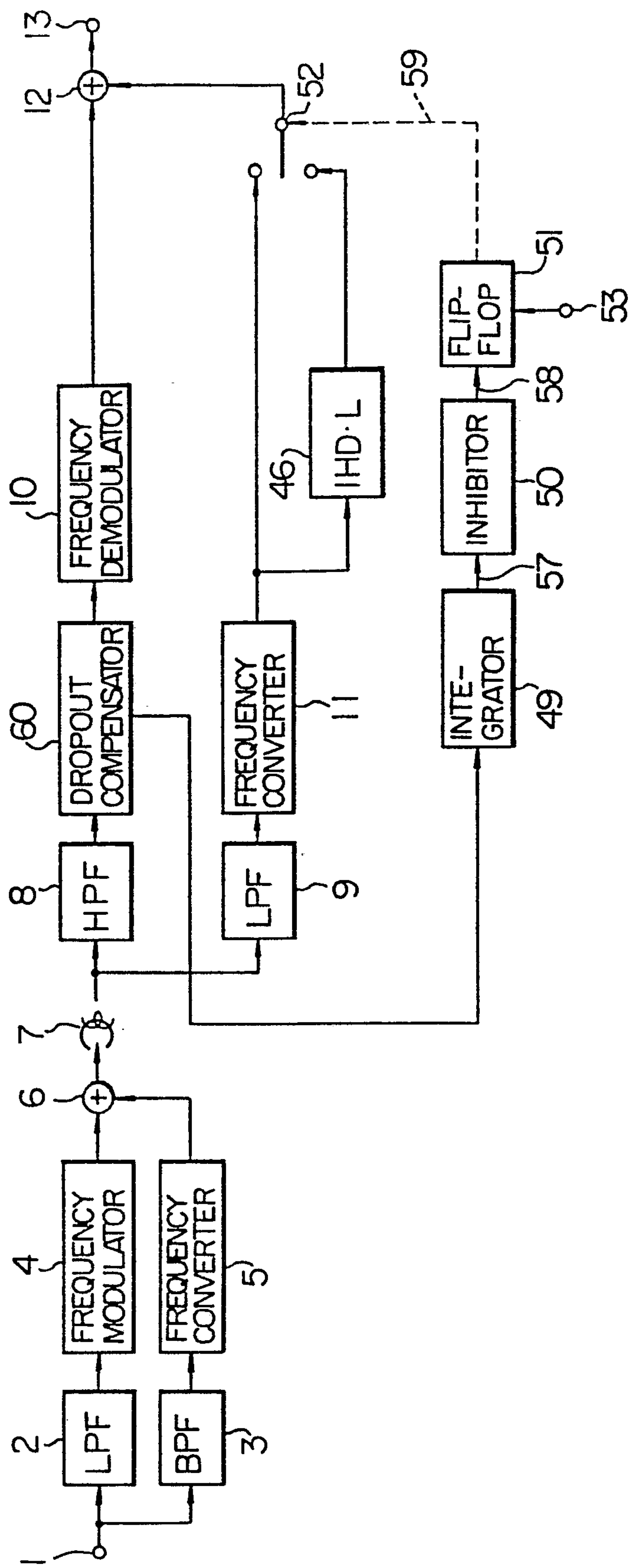
LPF
BPF
FREQUENCY MODULATOR
FREQUENCY CONVERTER
HPF
LPF
DROPOUT COMPENSATOR
FREQUENCY CONVERTER
FREQUENCY DEMODULATOR
IHD·L
INTE-GRATOR
INHIBITOR
FLIP-FLOP
1
2
3
4
5
6
7
8
9
10
11
12
13
46
49
50
51
52
53
57
58
59
60

FIG. 27

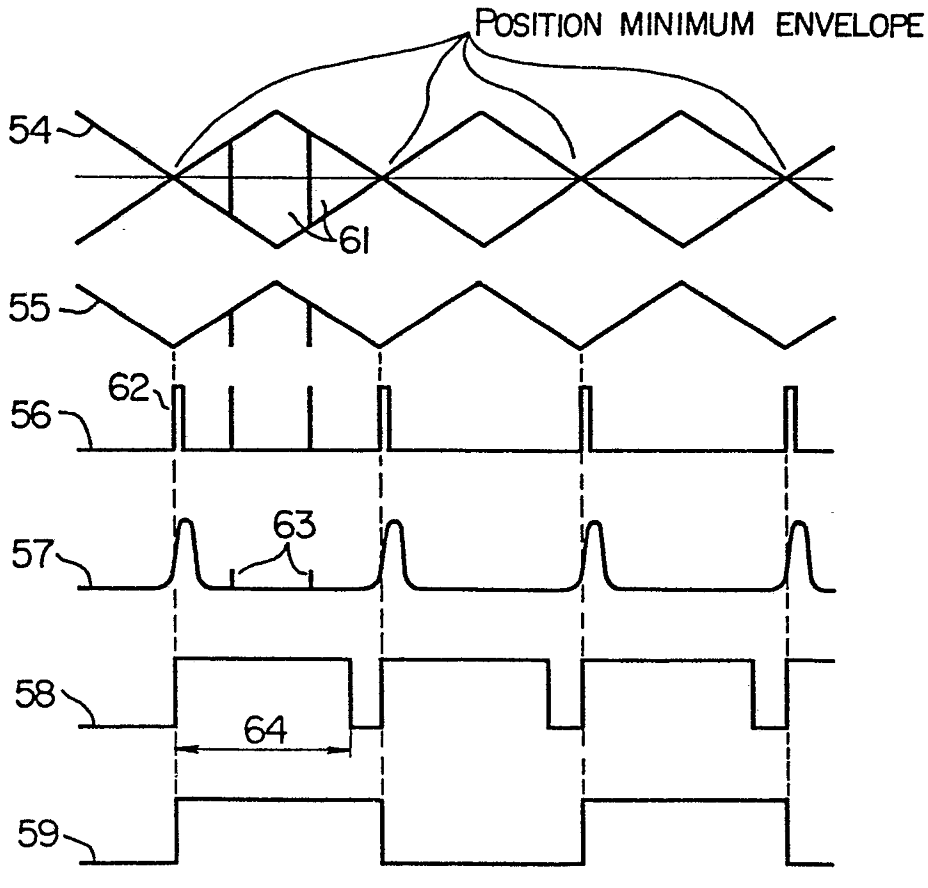

FIG. 28

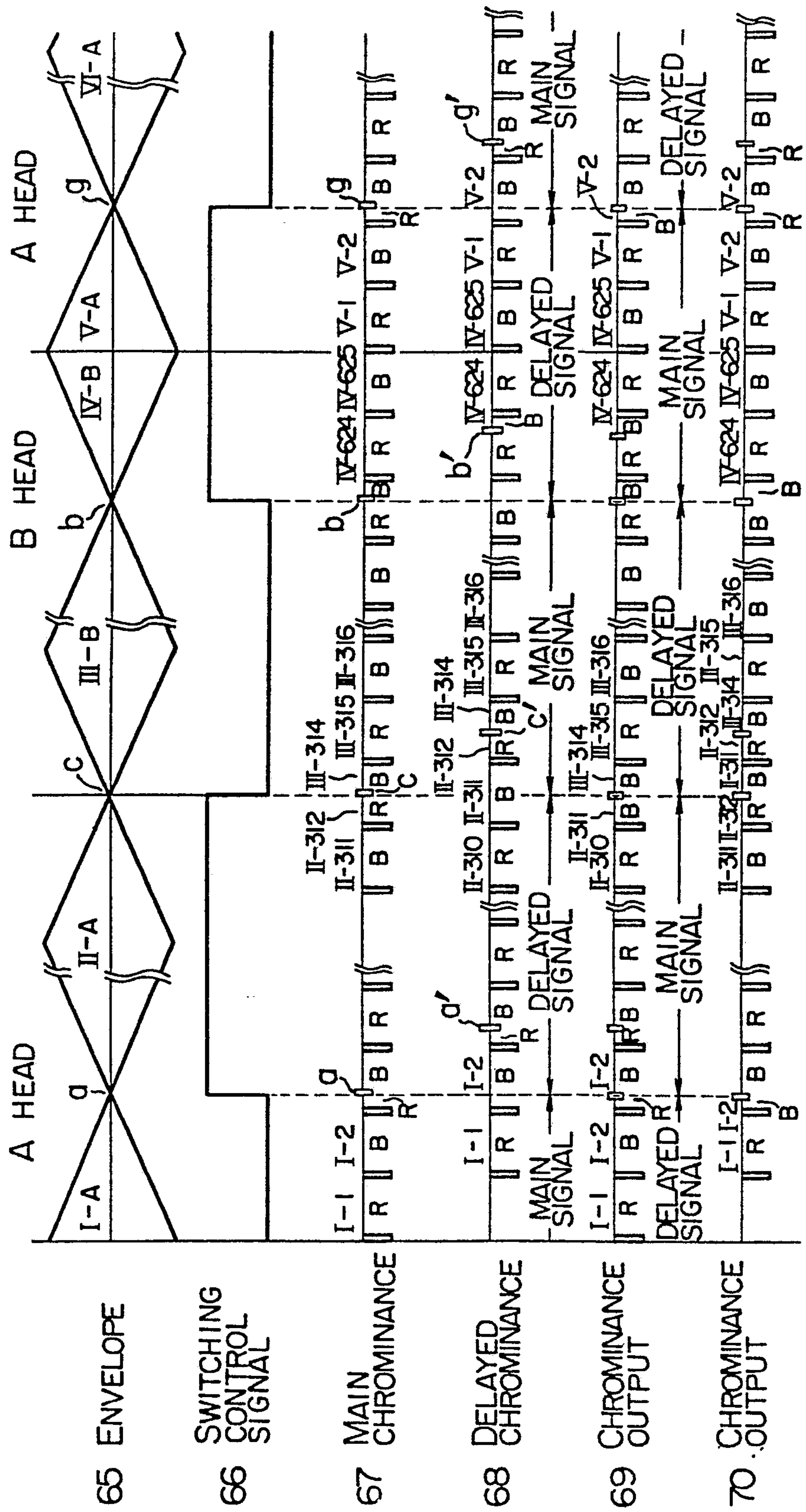
65 ENVELOPE
66 SWITCHING CONTROL SIGNAL
67 MAIN CHROMINANCE
68 DELAYED CHROMINANCE
69 CHROMINANCE OUTPUT
70 CHROMINANCE OUTPUT
A HEAD
B HEAD
A HEAD
MAIN SIGNAL
DELAYED SIGNAL

FIG. 29

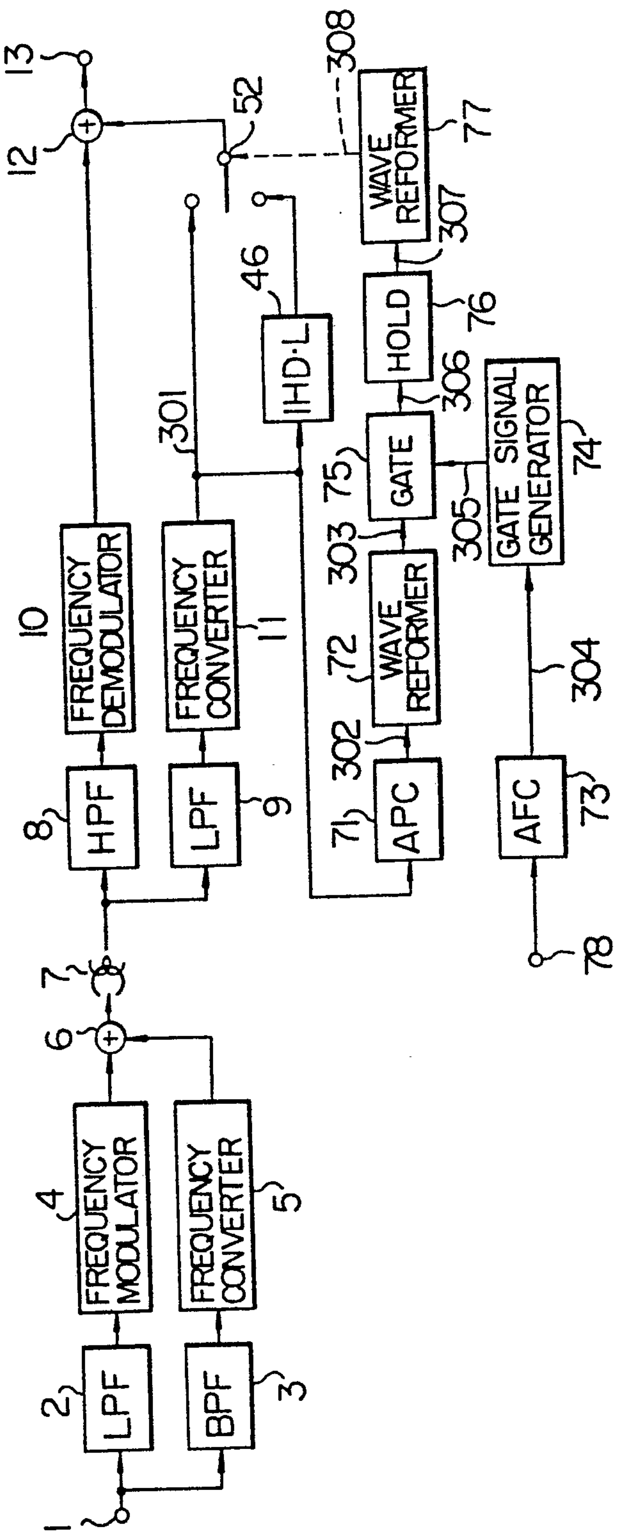

LPF
BPF
FREQUENCY MODULATOR
FREQUENCY CONVERTER
HPF
LPF
FREQUENCY DEMODULATOR
FREQUENCY CONVERTER
1HD·L
APC
AFC
WAVE REFORMER
GATE
GATE SIGNAL GENERATOR
HOLD
WAVE REFORMER
1
2
3
4
5
6
7
8
9
10
11
12
13
46
52
71
72
73
74
75
76
77
78
301
302
303
304
305
306
307
308

FIG. 30

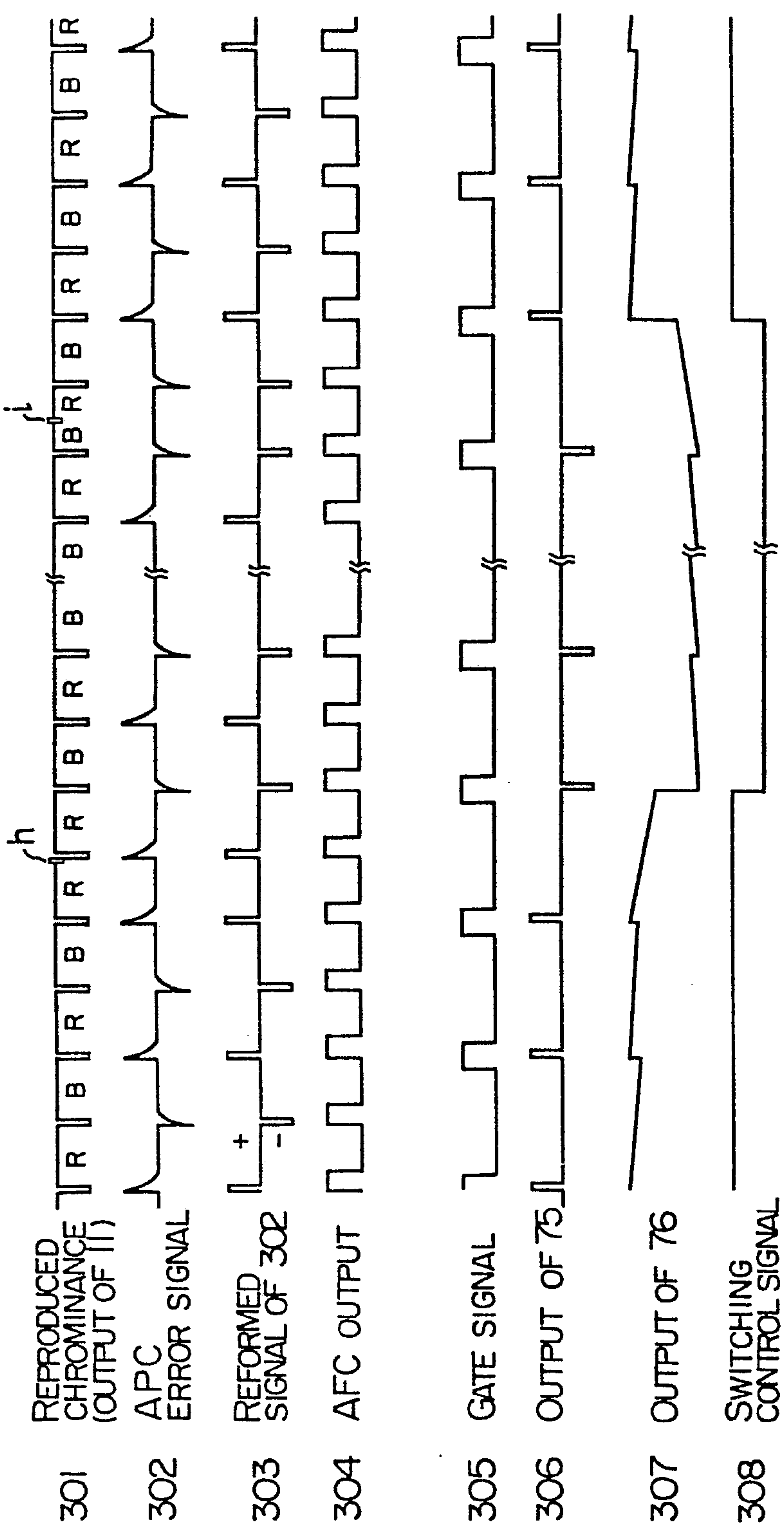
301 REPRODUCED CHROMINANCE (OUTPUT OF 111)
302 APC ERROR SIGNAL
303 REFORMED SIGNAL OF 302
304 AFC OUTPUT
305 GATE SIGNAL
306 OUTPUT OF 75
307 OUTPUT OF 76
308 SWITCHING CONTROL SIGNAL
R
B
h
i
+
-

FIG. 31

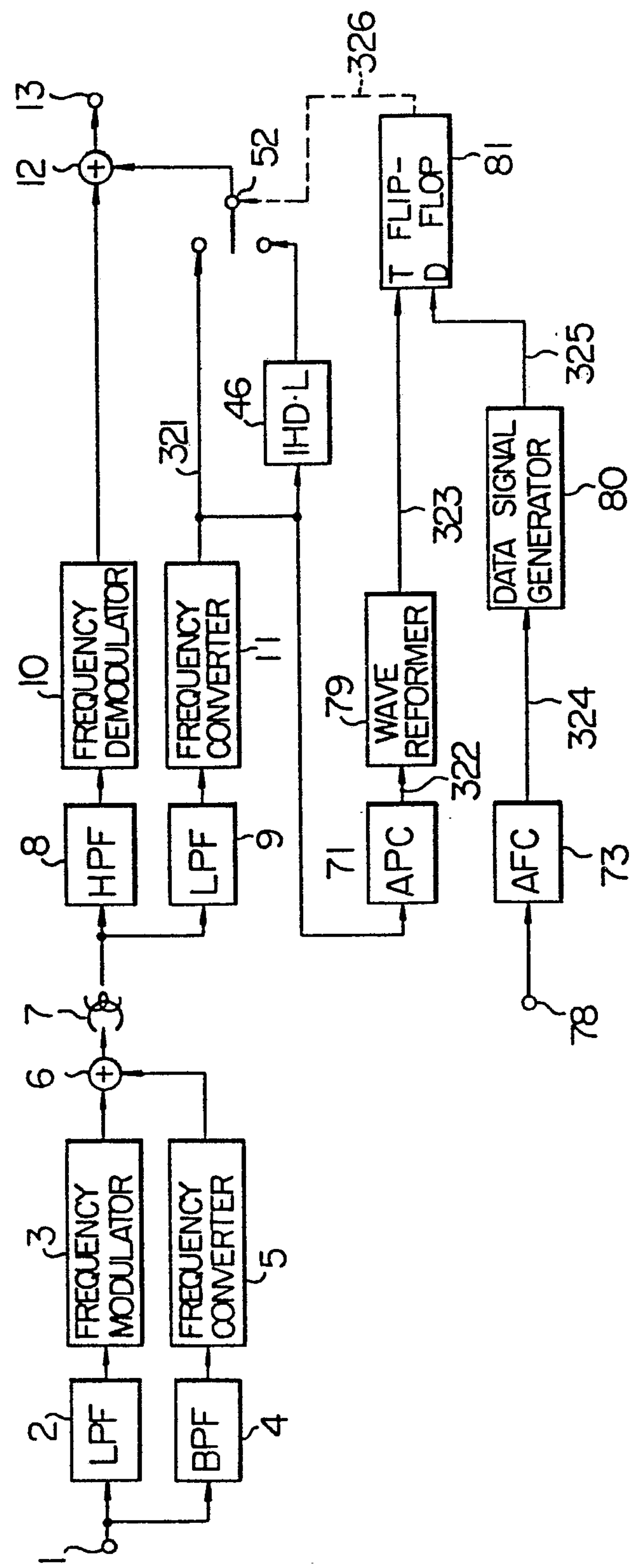
LPF
BPF
FREQUENCY MODULATOR
FREQUENCY CONVERTER
HPF
LPF
FREQUENCY DEMODULATOR
FREQUENCY CONVERTER
IHD·L
APC
WAVE REFORMER
AFC
DATA SIGNAL GENERATOR
T FLIP-FLOP D
1
2
3
4
5
6
7
8
9
10
11
12
13
46
52
71
73
78
79
80
81
321
322
323
324
325
326

FIG. 32

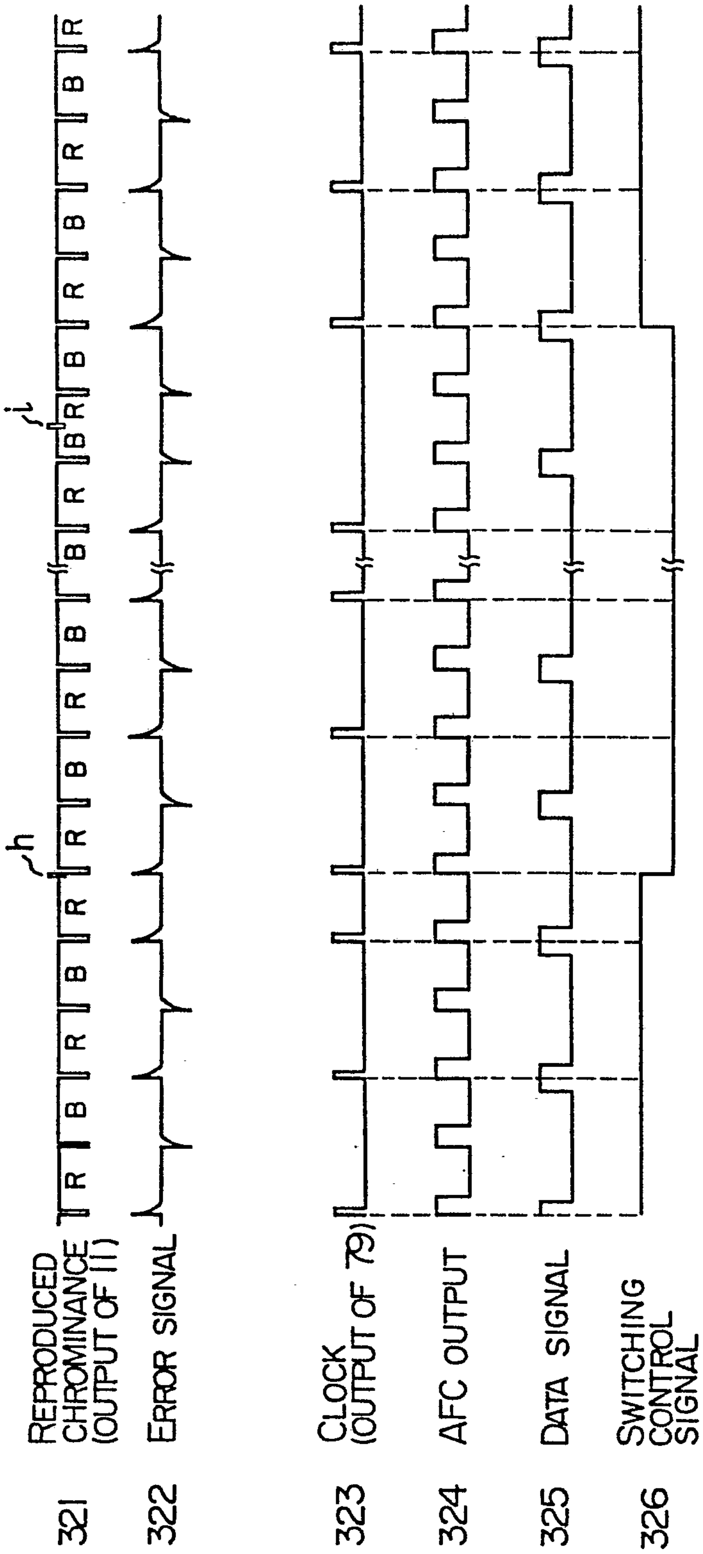
321 REPRODUCED CHROMINANCE (OUTPUT OF 11)
322 ERROR SIGNAL
323 CLOCK (OUTPUT OF 79)
324 AFC OUTPUT
325 DATA SIGNAL
326 SWITCHING CONTROL SIGNAL
R
B
h
i